# EUROPEAN PATENT APPLICATION

(11) **EP 4 510 635 A1**
(43) Date of publication of application: **19.02.2025**
(21) Application number: 23794944.1
(22) Date of filing: 31.03.2023
(51) Int. Cl.: H04W 4/02

(54) **POSITIONING METHOD AND APPARATUS FOR USE IN SIDELINK, AND READABLE STORAGE MEDIUM**

(30) Priority: 29.04.2022 CN 202210472860
(71) Applicant: CICT Connected and Intelligent Technologies Co., Ltd., Chongqing 400041 (CN)
(72) Inventor: ZHENG, Shilei, Chongqing 400000 (CN); ZHAO, Rui, Chongqing 400000 (CN); ZHAO, Li, Chongqing 400000 (CN); XI, Yifan, Chongqing 400000 (CN)
(74) Representative: Viering, Jentschura & Partner mbB Patent- und Rechtsanwälte
(86) International application number: PCT/CN2023/085364
(87) International publication number: WO 2023/207509

(57) **Abstract**

The present application relates to the technical field of communications, and disclosed thereby are a positioning method and apparatus for use in sidelink, and a readable storage medium. The method comprises: a first device sends first information to one or more second devices, the first information comprising positioning request signaling; the first device sends a first positioning reference signal to the second device(s), and the first device receives a second positioning reference signal from the second device(s); the first device, according to a measurement result of the first positioning reference signal and a measurement result of the second positioning reference signal, obtains a positioning solution result of the first device, or the first device receives the positioning solution result of the first device from the second device(s).

## Description

### CROSS-REFERENCE TO RELATED APPLICATION

The present disclosure claims a priority of Chinese patent application No. 202210472860.X filed on April 29, 2022, which is incorporated herein by reference in its entirety.

### TECHNICAL FIELD

The present disclosure belongs to the field of communication technologies, and in particular, to a positioning method and apparatus for a sidelink, and a readable storage medium.

### BACKGROUND

In coverage of a cellular network, a base station transmits a cell-specific downlink positioning reference signal (PRS), and a user equipment (UE) transmits an uplink sounding reference signal (SRS) used for positioning in uplink. Correspondingly, the UE can measure a reference signal time difference (RSTD), or measure a reference signal receiving power (RSRP) of a downlink positioning reference signal (DL PRS), or measure a time difference between a time at which the UE receives the DL PRS and a time at which the UE transmits the SRS. The base station can measure a relative time of arrival (RTOA) in uplink, an RSRP of the SRS, a time difference between a time at which the next generation node B (gNB) receives the SRS and a time at which the gNB transmits the DL PRS, an angle measurement value, and the like. A location of the UE is calculated by processing measurement values.

The work related to research and standardization of sidelink positioning is being actively performed. A sidelink is different from new radio (NR) downlink and uplink, and main application scenarios of the sidelink include indoor, outdoor, tunnel areas, and the like. At the same time, the scenarios such outdoor and tunnel areas also need to support positioning services with a moving speed of up to 250km/h, and thus it is necessary to redesign a corresponding positioning measurement process between the UEs to adapt to sidelink positioning technologies.

### SUMMARY

Embodiments of the present disclosure provide a positioning method and apparatus for a sidelink, and a readable storage medium, which can solve the problem that it is necessary to redesign a corresponding positioning measurement process between the UEs to adapt to sidelink positioning technologies.

In a first aspect, there is provided a positioning method for a sidelink, including:
transmitting, by a first device, first information to one or more second devices, where the first information includes a positioning request signaling;
transmitting, by the first device, a first positioning reference signal to the second devices, and receiving, by the first device, second positioning reference signals from the second devices; and
obtaining, by the first device, a positioning calculation result of the first device according to a measurement result of the first positioning reference signal and measurement results of the second positioning reference signals, or receiving, by the first device, the positioning calculation result of the first device from one of the second devices.

In a second aspect, there is provided a positioning method for a sidelink, including:
receiving, by a second device, first information from one or more first devices, where the first information includes a positioning request signaling;
receiving, by the second device, first positioning reference signals from the first devices, and transmitting, by the second device, a second positioning reference signal to the first devices; and
transmitting, by the second device, measurement results of the first positioning reference signals and a measurement result of the second positioning reference signal to the first devices, or obtaining, by the second device, positioning calculation results of the first devices according to the measurement results of the first positioning reference signals and the measurement result of the second positioning reference signal, and transmitting the positioning calculation results of the first devices to the first devices.

In a third aspect, there is provided a positioning method for a sidelink, including:
transmitting, by a first device, first information to one or more second devices, where the first information includes a positioning indication signaling;
transmitting, by the first device, a first positioning reference signal to the second devices, and receiving, by the first device, second positioning reference signals from the second devices; and
transmitting, by the first device, a measurement result of the first positioning reference signal and measurement results of the second positioning reference signals to the second devices, or obtaining, by the first device, positioning calculation results of the second devices according to the measurement result of the first positioning reference signal and the measurement results of the second positioning reference signals, and transmitting the positioning calculation results of the second devices to the second devices.

In a fourth aspect, there is provided a positioning method for a sidelink, including:
receiving, by a second device, first information from one or more first devices, where the first information includes a positioning indication signaling;
receiving, by the second device, first positioning reference signals from the first devices, and transmitting, by the second device, a second positioning reference signal to the first devices; and
obtaining, by the second device, a positioning calculation result of the second device according to measurement results of the first positioning reference signals and a measurement result of the second positioning reference signal, or receiving, by the second device, the positioning calculation result of the second device from one of the first devices.

In a fifth aspect, there is provided a positioning apparatus for a sidelink, including:
a first transmitting module configured to transmit, by a first device, first information to one or more second devices, where the first information includes a positioning request signaling;
a first transceiver module configured to transmit, by the first device, a first positioning reference signal to the second devices, and receive, by the first device, second positioning reference signals from the second devices; and
a first positioning module configured to obtain, by the first device, a positioning calculation result of the first device according to a measurement result of the first positioning reference signal and measurement results of the second positioning reference signals, or receive, by the first device, the positioning calculation result of the first device from one of the second devices.

In a sixth aspect, there is provided a positioning apparatus for a sidelink, including:
a first receiving module configured to receive, by a second device, first information from one or more first devices, where the first information includes a positioning request signaling;
a second transceiver module configured to receive, by the second device, first positioning reference signals from the first devices, and transmit, by the second device, a second positioning reference signal to the first devices; and
a second positioning module configured to transmit, by the second device, measurement results of the first positioning reference signals and a measurement result of the second positioning reference signal to the first devices, or obtain, by the second device, positioning calculation results of the first devices according to the measurement results of the first positioning reference signals and the measurement result of the second positioning reference signal, and transmit the positioning calculation results of the first devices to the first devices.

In a seventh aspect, there is provided a positioning apparatus for a sidelink, including:
a second transmitting module configured to transmit, by a first device, first information to one or more second devices, where the first information includes a positioning indication signaling;
a third transceiver module configured to transmit, by the first device, a first positioning reference signal to the second devices, and receive, by the first device, second positioning reference signals from the second devices; and
a third positioning module configured to transmit, by the first device, a measurement result of the first positioning reference signal and measurement results of the second positioning reference signals to the second devices, or obtain, by the first device, positioning calculation results of the second devices according to the measurement result of the first positioning reference signal and the measurement results of the second positioning reference signals, and transmit the positioning calculation results of the second devices to the second devices.

In an eighth aspect, there is provided a positioning apparatus for a sidelink, including:
a second receiving module configured to receive, by a second device, first information from one or more first devices, where the first information includes a positioning indication signaling;
a fourth transceiver module configured to receive, by the second device, first positioning reference signals from the first devices, and transmit, by the second device, a second positioning reference signal to the first devices; and
a fourth positioning module configured to obtain, by the second device, a positioning calculation result of the second device according to measurement results of the first positioning reference signals and a measurement result of the second positioning reference signal, or receive, by the second device, the positioning calculation result of the second device from one of the first devices.

In a ninth aspect, there is provided a positioning apparatus for a sidelink, including a memory, a transceiver and a processor,
where the memory is configured to store a computer program, the transceiver is configured to transmit and receive data under a control of a processor, and the processor is configured to read the computer program stored in the memory and perform operations of:
transmitting, by a first device, first information to one or more second devices, where the first information includes a positioning request signaling;
transmitting, by the first device, a first positioning reference signal to the second devices, and receiving, by the first device, second positioning reference signals from the second devices; and
obtaining, by the first device, a positioning calculation result of the first device according to a measurement result of the first positioning reference signal and measurement results of the second positioning reference signals, or receiving, by the first device, the positioning calculation result of the first device from one of the second devices.

In a tenth aspect, there is provided a positioning apparatus for a sidelink, including a memory, a transceiver and a processor,
where the memory is configured to store a computer program, the transceiver is configured to transmit and receive data under a control of a processor, and the processor is configured to read the computer program stored in the memory and perform operations of:
receiving, by a second device, first information from one or more first devices, where the first information includes a positioning request signaling;
receiving, by the second device, first positioning reference signals from the first devices, and transmitting, by the second device, a second positioning reference signal to the first devices; and
transmitting, by the second device, measurement results of the first positioning reference signals and a measurement result of the second positioning reference signal to the first devices, or obtaining, by the second device, positioning calculation results of the first devices according to the measurement results of the first positioning reference signals and the measurement result of the second positioning reference signal, and transmitting the positioning calculation results of the first devices to the first devices.

In an eleventh aspect, there is provided a positioning apparatus for a sidelink, including a memory, a transceiver and a processor,
where the memory is configured to store a computer program, the transceiver is configured to transmit and receive data under a control of a processor, and the processor is configured to read the computer program stored in the memory and perform operations of:
transmitting, by a first device, first information to one or more second devices, where the first information includes a positioning indication signaling;
transmitting, by the first device, a first positioning reference signal to the second devices, and receiving, by the first device, second positioning reference signals from the second devices; and
transmitting, by the first device, a measurement result of the first positioning reference signal and measurement results of the second positioning reference signals to the second devices, or obtaining, by the first device, positioning calculation results of the second devices according to the measurement result of the first positioning reference signal and the measurement results of the second positioning reference signals, and transmitting the positioning calculation results of the second devices to the second devices.

In a twelfth aspect, there is provided a positioning apparatus for a sidelink, including a memory, a transceiver and a processor,
where the memory is configured to store a computer program, the transceiver is configured to transmit and receive data under a control of a processor, and the processor is configured to read the computer program stored in the memory and perform operations of:
receiving, by a second device, first information from one or more first devices, where the first information includes a positioning indication signaling;
receiving, by the second device, first positioning reference signals from the first devices, and transmitting, by the second device, a second positioning reference signal to the first devices; and
obtaining, by the second device, a positioning calculation result of the second device according to measurement results of the first positioning reference signals and a measurement result of the second positioning reference signal, or receiving, by the second device, the positioning calculation result of the second device from one of the first devices.

In a thirteenth aspect, there is provided a readable storage medium, where the readable storage medium stores a program or an instruction, and when the program or the instruction is executed by a processor, steps of the positioning method for the sidelink according to the first aspect, or steps of the positioning method for the sidelink according to the second aspect, or steps of the positioning method for the sidelink according to the third aspect, or steps of the positioning method for the sidelink according to the fourth aspect are implemented.

In a fourteenth aspect, there is provided a chip. The chip includes a processor and a communication interface, where the communication interface is coupled to the processor, and the processor is configured to run a program or an instruction to implement steps of the positioning method for the sidelink according to the first aspect, or steps of the positioning method for the sidelink according to the second aspect, or steps of the positioning method for the sidelink according to the third aspect, or steps of the positioning method for the sidelink according to the fourth aspect.

In a fifteenth aspect, there is provided a computer program/program product. The computer program/program product is stored in a storage medium, and the computer program/program product is executed by at least one processor to implement steps of the positioning method for the sidelink according to the first aspect, or steps of the positioning method for the sidelink according to the second aspect, or steps of the positioning method for the sidelink according to the third aspect, or steps of the positioning method for the sidelink according to the fourth aspect.

In the embodiments of the present disclosure, the first device transmits the first information to the second devices to trigger the positioning process, the first device interacts with the second devices through the first positioning reference signal and the second positioning reference signals and obtains the positioning calculation result according to the measurement result of the first positioning reference signal and the measurement results of the second positioning reference signals, thereby realizing the positioning measurement between UEs in the sidelink scenario.

### BRIEF DESCRIPTION OF THE DRAWINGS

FIG. 1 is a block diagram of a wireless communication system according to an embodiment of the present disclosure.
FIG. 2 is a schematic flowchart of a positioning method for a sidelink according to an embodiment of the present disclosure.
FIG. 3 is another schematic flowchart of a positioning method for a sidelink according to an embodiment of the present disclosure.
FIG. 4 is still another schematic flowchart of a positioning method for a sidelink according to an embodiment of the present disclosure.
FIG. 5 is yet another schematic flowchart of a positioning method for a sidelink according to an embodiment of the present disclosure.
FIG. 6a is a schematic flowchart of an implementation example according to an embodiment of the present disclosure.
FIG. 6b is another schematic flowchart of an implementation example according to an embodiment of the present disclosure.
FIG. 6c is still another schematic flowchart of an implementation example according to an embodiment of the present disclosure.
FIG. 6d is yet another schematic flowchart of an implementation example according to an embodiment of the present disclosure.
FIG. 6e is still yet another schematic flowchart of an implementation example according to an embodiment of the present disclosure.
FIG. 6f is a further schematic flowchart of an implementation example according to an embodiment of the present disclosure.
FIG. 6g is a still further schematic flowchart of an implementation example according to an embodiment of the present disclosure.
FIG. 6h is a yet further schematic flowchart of an implementation example according to an embodiment of the present disclosure.
FIG. 6i is a still yet further schematic flowchart of an implementation example according to an embodiment of the present disclosure.
FIG. 7 is a schematic structural diagram of a positioning apparatus for a sidelink according to an embodiment of the present disclosure.
FIG. 8 is another schematic structural diagram of a positioning apparatus for a sidelink according to an embodiment of the present disclosure.
FIG. 9 is a still another schematic structural diagram of a positioning apparatus for a sidelink according to an embodiment of the present disclosure.
FIG. 10 is a yet another schematic structural diagram of a positioning apparatus for a sidelink according to an embodiment of the present disclosure.
FIG. 11 is a still yet another schematic structural diagram of a positioning apparatus for a sidelink according to an embodiment of the present disclosure.

### DETAILED DESCRIPTION

Technical solutions in embodiments of the present disclosure are clearly described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure fall within the protection scope of the present disclosure.

Terms "first", "second", and the like in the specification and claims of the present disclosure are used to distinguish similar objects instead of describing a specific order or sequence. It should be understood that the terms used in this way are interchangeable in appropriate circumstances, so that the embodiments of the present disclosure can be implemented in an order other than those illustrated or described herein. The objects distinguished by "first" and "second" are usually of a same type, and the number of objects is not limited, for example, there may be one or more first objects. In addition, "and/or" in the specification and claims represents at least one of connected objects, and the character "/" generally indicates an "or" relationship between associated objects.

It should be noted that the technologies described in the embodiments of the present disclosure are not limited to a long term evolution (LTE)/LTE-advanced (LTE-A) system, and can also be used in other wireless communication systems, for example, code division multiple access (CDMA), time division multiple access (TDMA), frequency division multiple access (FDMA), orthogonal frequency division multiple access (OFDMA), single-carrier frequency-division multiple access (SC-FDMA), and other systems. The terms "system" and "network" in the embodiments of the present disclosure can be used interchangeably. The technologies described herein can be applied to both the systems and the radio technologies mentioned above as well as to other systems and radio technologies. The following description describes a new radio (NR) system for exemplary purposes, and terminologies in NR are used in most of the following descriptions, but these technologies can also be applied to applications other than NR system applications, for example, 6^{th} generation (6G) communication systems.

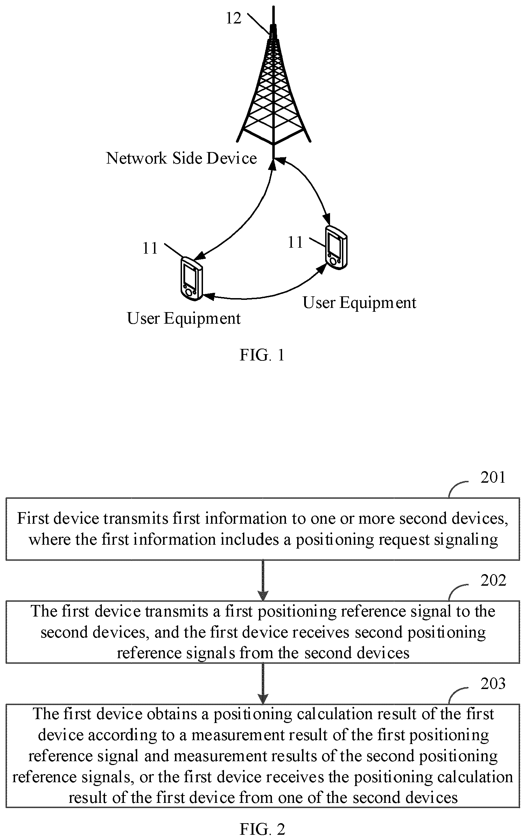

FIG. 1 is a block diagram of a wireless communication system to which embodiments of the present disclosure can be applied. The wireless communication system includes a user equipment 11 and a network side device 12. The user equipment 11 can be a terminal side device such as a mobile phone, a tablet personal computer, a laptop computer or a notebook computer, a personal digital assistant (PDA), a palmtop computer, a netbook, an ultra-mobile personal computer (UMPC), a mobile internet device (MID), an augmented reality (AR)/virtual reality (VR) device, a robot, a wearable device, vehicle user equipment (VUE), pedestrian user equipment (PUE), a smart home device (a home device having a wireless communication function, for example, a refrigerator, a television, a washing machine, or a furniture), a game console, a personal computer (PC), a teller machine, or a self-service machine. The wearable device includes a smart watch, a smart bracelet, smart headphones, smart glasses, smart jewelry (a smart bracelet, a smart hand chain, a smart ring, a smart necklace, a smart anklet, a smart ankle chain, and the like), a smart wristband, smart clothes, and the like. It should be noted that a specific type of the user equipment 11 is not limited in the embodiments of the present disclosure. The network side device 12 can include an access network device or a core network device. The access network device can also be referred to as a radio access network device, a radio access network (RAN), a radio access network function, or a radio access network unit. The access network device can include a base station, a wireless local area network (WLAN) access node, a Wi-Fi node, or the like. The base station can be referred to as a node B, an evolved node B (eNB), an access point, a base transceiver station (BTS), a radio base station, a radio transceiver, a basic service set (BSS), an extended service set (ESS), a home node B, a home evolved node B, a transmitting receiving point (TRP), or any other appropriate term in the art. As long as the same technical effect is achieved, the base station is not limited to a specified technical term. It should be noted that in the embodiments of the present disclosure, only a base station in an NR system is used as an example for description, and a specific type of the base station is not limited. The core network device can include but be not limited to at least one of a core network node, a core network function, a mobility management entity (MME), an access and mobility management function (AMF), a session management function (SMF), a user plane function (UPF), a policy control function (PCF), a policy and charging rules function (PCRF), an edge application server discovery function (EASDF), a unified data management (UDM), a unified data repository (UDR), a home subscriber server (HSS), a centralized network configuration (CNC), a network repository function (NRF), a network exposure function (NEF), a local NEF or L-NEF, a binding support function (BSF), an application function (AF), or the like. It should be noted that in the embodiments of the present disclosure, only a core network device in the NR system is used as an example for description, and a specific type of the core network device is not limited.

To better understand the technical solutions of the present disclosure, the following contents are first introduced.

In NR sidelink, a physical sidelink control channel (PSCCH) and a physical sidelink shared channel (PSSCH) use methods of time division multiplexing (TDM) and frequency division multiplexing (FDM), and introduce 2nd-stage sidelink control information (2nd-stage SCI). The 2nd-stage sidelink control information and data are carried by PSSCH, 1st-stage SCI is carried by PSCCH and is used to indicate information such as a position, a priority and a period of time-frequency resource occupied by a current transport block (TB) and a corresponding modulation and coding scheme (MCS), without introducing the corresponding sidelink PRS.

For NR positioning, two reference signals for positioning are mainly introduced: a downlink positioning reference signal (PRS) and an uplink sounding reference signal (SRS) for positioning.

The downlink positioning reference signal (PRS) uses a gold sequence, and introduces PRS resources, PRS resource set, PRS positioning frequency layer, and other designs. The frequency domain of the PRS resources can use a comb structure, and the time domain can occupy multiple consecutive orthogonal frequency division multiplexing (OFDM) symbols. Using a single port, the maximum bandwidth cannot exceed 272PRBs, and the minimum bandwidth cannot be less than 24PRBs. PRS only supports periodic transmission.

The uplink sounding reference signal (SRS) for positioning uses a ZC sequence, which can continuously occupy multiple OFDM symbols in the time domain, and also uses the comb structure in the frequency domain, so as to support frequency division multiplexing of multiple sounding reference signals (SRS)-position (POS) on a same orthogonal frequency division multiplexing (OFDM) symbol. Compared to transmitting through two ports, the advantage of using the single port is that a power spectral density of SRS-POS signals on a receiver side of a base station can be increased, thereby improving the coverage and quality of the SRS-POS signals. The maximum bandwidth supported in the frequency domain is 272RBs and the minimum bandwidth is 4RBs. SRS-POS supports three resource type configurations, for example, periodic, semi-persistent and aperiodic.

NR positioning supports "RAT-independent" positioning technologies, including global navigation satellite system (GNSS) positioning, atmospheric pressure sensor positioning, WLAN positioning, inertial navigation positioning, Bluetooth positioning and terrestrial beacon system positioning.

NR positioning has studied "RAT-dependent" and hybrid positioning technologies to improve positioning accuracy. The main solution is that gNB periodically transmits downlink positioning reference signals (PRS), which supports DL (downlink)-TDOA and DL-AoD (angle of departure) measurement, and enhanced cell identification (E-CID) detection. The user equipment transmits uplink sounding reference symbol (SRS) for positioning, which supports UL (uplink)-TDOA and UL-AoA (angle of arrival) measurement, and supports a combination of uplink and downlink to perform round trip time (RTT) measurement, and thus location positioning can be performed based on multi-RTT measured by a plurality of base stations.

The overall positioning process of NR/LTE positioning is controlled and scheduled by the base stations and location management functions (LMFs).

Disadvantages of the related art are as follows.

The positioning solution of the cellular network in the related art requires interaction between gNB and LMF, which is not supported for scenarios outside cellular coverage. However, sidelink (SL) positioning performs distributed positioning processing, which can be applied to the scenarios outside cellular coverage without the interaction between gNB and LMF. Therefore, the mechanisms in the related art cannot support the scenarios outside cellular coverage.

A positioning method for a sidelink provided in the embodiments of the present disclosure will be described in detail through some embodiments and application scenarios with reference to the accompanying drawings.

Referring to FIG. 2, an embodiment of the present disclosure provides a positioning method for a sidelink. An execution subject of the method is a first device, which can be a user equipment. Correspondingly, a peer device that communicates with and interacts with the first device is one or more second devices, which can also be the user equipment. The first device communicates with the second devices through the sidelink. The method includes the following steps.

Step 201, a first device transmits first information to one or more second devices, where the first information includes a positioning request signaling.

In the embodiment of the present disclosure, the first information includes a positioning request signaling, which is used to request a second device to assist the first device in positioning (or ranging). The first device can transmit the first information to one or more second devices, that is, the first device can request one or more second devices to assist the first device in positioning (or ranging).

Step 202, the first device transmits a first positioning reference signal to the second devices, and the first device receives second positioning reference signals from the second devices.

In the embodiment of the present disclosure, the first device interacts with the second devices through positioning reference signals. The first device transmits a first positioning reference signal (which can be abbreviated as the first PRS, the first SL-PRS, or the like, and the present disclosure is not limited to this) to the second devices, and the second devices transmit second positioning reference signals (which can be abbreviated as the second PRSs, the second SL-PRSs, or the like, and the present disclosure is not limited to this) to the first device.

It should be noted that a specific information transmission sequence flow of the interaction between the first device with the second devices through positioning reference signals can be implemented in various methods, which will be described in detail later.

Step 203, the first device obtains a positioning calculation result of the first device according to a measurement result of the first positioning reference signal and measurement results of the second positioning reference signals, or the first device receives the positioning calculation result of the first device from one of the second devices.

In the embodiment of the present disclosure, the first device can obtain the positioning calculation result of the first device according to the measurement result of the first positioning reference signal and the measurement results of the second positioning reference signals, that is, a location calculation can be performed by the first device. Alternatively, the first device can receive the positioning calculation result of the first device from one of the second devices, that is, the location calculation can be performed by the second devices, and then the positioning calculation result is transmitted to the first device by one of the second devices.

The measurement result of the first positioning reference signal and the measurement results of the second positioning reference signals mentioned above can specifically be receive-transport time differences between the first positioning reference signal with the second positioning reference signals, that is, the first device measures time differences between transmitting of the first PRS with receiving of the second PRSs, and the second devices measure time differences between transmitting of the second PRSs and receiving of the first PRS. By combining the time differences measured by the first device and the second devices, round-trip times (RTTs) between the first device with the second devices can be calculated, and the final positioning calculation can be performed according to the round-trip times, thereby realizing the positioning method based on RTT.

In the embodiment of the present disclosure, the first device transmits the first information to the second devices to trigger the positioning process, the first device interacts with the second devices through the first positioning reference signal and the second positioning reference signals and obtains the positioning calculation result according to the measurement result of the first positioning reference signal and the measurement results of the second positioning reference signals, thereby realizing the positioning measurement between UEs in the sidelink scenario.

In one possible embodiment, the first information includes at least one of the followings.
(1) Signaling type information of the first information, including at least one of positioning reference signal request signaling or a positioning request flag bit. The positioning reference signal request signaling is used to trigger at least one second device to assist the first device in positioning or ranging. The positioning request flag bit is used to distinguish current information as the positioning request signaling.
(2) Identification information, including at least one of destination identification information, source identification information or a session process ID. The session process ID indicates ID information of the positioning process. Since the first device can request a plurality of second devices to assist in positioning, the measured positioning reference signals and the second devices corresponding to the measured positioning reference signals can be determined through the session process ID, thereby preventing incorrect corresponding of the positioning reference signals in the process of interacting with a plurality of second devices.
(3) Positioning reference signal configuration information, including at least one of positioning reference signal configuration parameters, time interval information or a time domain reference point.
(4) Positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

It should be noted that at least a part of information contents of the first information can be configured by using one or more higher-layer parameters or preconfigured, that is, only a part of the information contents mentioned above can be included in the first information, and the rest can be configured by using one or more higher-layer parameters or preconfigured.

In one possible embodiment, transmitting, by the first device, the first positioning reference signal to the second devices, and receiving, by the first device, the second positioning reference signals from the second devices in step 202 includes:
(1) transmitting, by the first device, the first positioning reference signal to the second devices; and
(2) receiving, by the first device, second information and the second positioning reference signals from the second devices, where the second information is feedback information of the first information.

In the embodiment of the present disclosure, an information interaction process between the first device with the second devices is that the first device first transmits the first positioning reference signal to the second devices, where the first positioning reference signal may or may not be transmitted simultaneously with the first information; and then the second devices transmit the second information and the second positioning reference signals to the first device, where the second information is the feedback information of the first information. It should be noted that when the second devices transmit the second information and the second positioning reference signals to the first device, the second information and the second positioning reference signals can be transmitted at the same time or at different times, that is, the second information and the second positioning reference signals can be transmitted together in the same slot or in different slots respectively. It should be noted that this rule is also followed in the following descriptions when describing other steps of transmitting a plurality of information, that is, the plurality of information can be transmitted at the same time or at different times, and will not be repeated.

Obtaining, by the first device, the positioning calculation result of the first device according to the measurement result of the first positioning reference signal and the measurement results of the second positioning reference signals in step 203 includes:
(1) performing, by the first device, positioning measurement according to the second information and/or target positioning reference signals to obtain a first positioning measurement value, where the target positioning reference signals include the first positioning reference signal and the second positioning reference signals;
(2) receiving, by the first device, second positioning measurement values measured by the second devices from the second devices through the second information; and
(3) obtaining, by the first device, the positioning calculation result of the first device according to the second information and/or target positioning measurement values, where the target positioning measurement values include the first positioning measurement value and the second positioning measurement values.

In the embodiment of the present disclosure, corresponding to the above interaction process, the first device performs positioning calculation according to the measurement result of the first positioning reference signal and the measurement results of the second positioning reference signals to obtain the positioning calculation result of the first device. It should be noted that the measurement results of the first positioning reference signal and the second positioning reference signals measured by the first device are referred to as the first positioning measurement value, and the measurement results of the first positioning reference signal and the second positioning reference signals measured by the second devices are referred to as the second positioning measurement value. This naming method will also be followed in the following descriptions, and will not be repeated.

In the process of performing positioning measurement by the first device to obtain the first positioning measurement value, the first device can perform measurement according to the first positioning reference signal and the second positioning reference signals, that is, the first device directly measures the first positioning reference signal and the second positioning reference signals. Alternatively, the first device can perform measurement according to the second information, the first positioning reference signal and the second positioning reference signals, where the second information can carry configuration information or assistance information related to positioning measurement and is used for the first device to perform positioning measurement. Similarly, in the process of performing positioning calculation by the first device, the first device can perform positioning calculation according to the first positioning measurement value and the second positioning measurement values; or the first device can perform positioning calculation according to the second information, the first positioning measurement value and the second positioning measurement values, where the second information can carry configuration information or assistance information related to positioning calculation for the first device to perform positioning measurement, or the second information can carry coordinate information and location information of the second devices for performing positioning calculation by the first device in an absolute positioning scenario.

In one possible embodiment, transmitting, by the first device, the first positioning reference signal to the second devices, and receiving, by the first device, the second positioning reference signals from the second devices in step 202 includes:
(1) receiving, by the first device, second information and the second positioning reference signals from the second devices, where the second information is feedback information of the first information;
(2) transmitting, by the first device, fourth information and the first positioning reference signal to the second devices, where the fourth information is feedback information of the second information; and
(3) receiving, by the first device, fifth information from the second devices, where the fifth information is feedback information of the fourth information.

Obtaining, by the first device, the positioning calculation result of the first device according to the measurement result of the first positioning reference signal and the measurement results of the second positioning reference signals in step 203 includes:
(1) performing, by the first device, positioning measurement according to the second information and/or target positioning reference signals to obtain a first positioning measurement value;
(2) receiving, by the first device, second positioning measurement values measured by the second devices from the second devices through the fifth information, where the target positioning reference signals include the first positioning reference signal and the second positioning reference signals; and
(3) obtaining, by the first device, the positioning calculation result of the first device according to first target information and/or target positioning measurement values, where the first target information is the second information or the fifth information, and the target positioning measurement values include the first positioning measurement value and the second positioning measurement values.

In the embodiment of the present disclosure, it is corresponding that the positioning calculation is performed by the first device. After the first device interacts with the second devices according to the above interaction process and the first positioning measurement value and the second positioning measurement values are obtained, the first device performs the positioning calculation. Specifically, the first device can perform positioning calculation according to the first positioning measurement value and the second positioning measurement values, or the first device can perform positioning calculation according to the second information or the fifth information (the second information or the fifth information carries coordinate information and location information of the second devices, that is, the second devices can carry the coordinate information and location information of the second devices when transmitting the second information, or the second devices can also carry the coordinate information and location information of the second devices when transmitting the fifth information), the first positioning measurement value and the second positioning measurement values.

Receiving, by the first device, the positioning calculation result of the first device from one of the second devices in step 203 includes:
(1) performing, by the first device, positioning measurement according to the second information and/or target positioning reference signals to obtain a first positioning measurement value;
(2) transmitting, by the first device, the first positioning measurement value to the second devices through the fourth information; and
(3) receiving, by the first device, the positioning calculation result of the first device from one of the second devices through the fifth information, where the positioning calculation result of the first device is obtained by the second devices according to the fourth information and/or target positioning measurement values, where the target positioning measurement values include the first positioning measurement value and the second positioning measurement values.

In the embodiment of the present disclosure, it is corresponding that the positioning calculation is performed by the second devices. After the first device interacts with the second devices according to the above interaction process and the first positioning measurement value and the second positioning measurement values are obtained, the second devices perform positioning calculation. Specifically, the second devices can perform positioning calculation according to the first positioning measurement value and the second positioning measurement values, or the second devices can perform positioning calculation according to the fourth information, the first positioning measurement value and the second positioning measurement values, and then the second devices transmit the positioning calculation results to the first device.

It should be noted that when the first device transmits the first SL-PRS,
1) a resource location for transmitting the first SL-PRS and/or a sequence generation of the first SL-PRS can have a certain correlation with contents of the first information/the second information/the fourth information and/or resource locations occupied by the first information/the second information/the fourth information, and can be within the same band width part (BWP) or on different BWPs;
2) alternatively, the first device multiplexes the first information or the fourth information with the first SL-PRS on one or more physical channels in the same slot for transmission; for example, the first information or the fourth information is carried by PSCCH (1st stage SCI) or PSSCH (2nd stage SCI or MAC control element (MAC CE)) or a dedicated positioning channel; SL-PRS and PSSCH multiplex the same time-frequency position, and an overlapping position of PSSCH and SL-PRS uses a mapping method of rate matching or punctured;
3) alternatively, the first device can also transmit the corresponding first SL-PRS according to SL-PRS configuration parameters and in combination with a specific SL-PRS resource selection process, where the SL-PRS configuration parameters can be obtained by the first information/the second information/the fourth information and/or configured by using one or more higher-layer parameters or preconfigured, or SL-PRS configuration parameters in the first information/the fourth information are used to indicate the specific occupation of time-frequency resource positions by the first SL-PRS;
4) it can also be defined that the SL-PRS needs to occupy at least N(>=3) consecutive OFDM symbols for transmission, where the SL-PRS is repeatedly mapped on first two symbols, and the SL-PRS on the first symbol can be used for both AGC processing and positioning measurement, and the last symbol is used as GP;
5) if SL-PRS is periodic transmission, it is unnecessary to be triggered by signaling; and if SL-PRS is aperiodic transmission or semi-persistent transmission, it is necessary to be triggered by the first information/the second information/the fourth information; and
6) the first information/the second information/the third information/the fourth information/the fifth information and the first SL-PRS can be transmitted separately or in a binding manner.

It should be noted that when the second devices transmit the second SL-PRSs:
1) resource locations for transmitting the second SL-PRSs and/or a sequence generation of the second SL-PRSs can have a certain correlation with contents of the second information/ the first information and/or resource locations occupied by the second information/ the first information, and can be within the same BWP or on different BWPs;
2) alternatively, the second devices multiplex the second information with the second SL-PRSs on one or more physical channels in the same slot for transmission; for example, the second information is carried by PSCCH (1st stage SCI) or PSSCH (2nd stage SCI or MAC CE) or a dedicated positioning channel; SL-PRS and PSSCH multiplex the same time-frequency position, and an overlapping position of PSSCH and SL-PRS uses a mapping method of rate matching or punctured;
3) alternatively, the second devices can also transmit the corresponding second SL-PRSs according to SL-PRS configuration parameters and in combination with a specific SL-PRS resource selection process, where the SL-PRS configuration parameters can be obtained by the second information/the first information and/or configured by using one or more higher-layer parameters or preconfigured, or SL-PRS configuration parameters in the second information are used to indicate the specific occupation of time-frequency resource positions by the second SL-PRSs;
4) it can also be defined that the SL-PRS needs to occupy at least N(>=3) consecutive OFDM symbols for transmission, where the SL-PRS is repeatedly mapped on first two symbols, and the SL-PRS on the first symbol can be used for both AGC processing and positioning measurement, and the last symbol is used as GP;
5) if SL-PRS is periodic transmission, it is unnecessary to be triggered by signaling; and if SL-PRS is aperiodic transmission or semi-persistent transmission, it is necessary to be triggered by the first information/the second information; and
6) the first information/the second information/the third information/the fourth information/the fifth information and the first SL-PRS can be transmitted separately or in a binding manner.

Subsequent descriptions about the first SL-PRS transmitted by the first device and the second SL-PRSs transmitted by the second devices can refer to the above, which will not be repeated here.

In one possible embodiment, information contents of the second information, the fourth information and the fifth information appearing in the above interaction process include at least one of:
(1) at least part of the third information;
(2) a positioning measurement value;
(3) a time stamp of the positioning measurement value;
(4) quality indication of the positioning measurement value;
(5) positioning measurement value identification information; or
(6) positioning calculation result information,

The third information includes at least one of:
(1.1) signaling type information of the third information, including at least one of positioning reference signal request signaling or a positioning request flag bit;
(1.2) identification information, including at least one of destination identification information, source identification information or a session process ID;
(1.3) positioning reference signal configuration information, including at least one of positioning reference signal configuration parameters, time interval information or a time domain reference point; or
(1.4) positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

It should be noted that the second information, the fourth information and the fifth information are the same as the first information mentioned above, and at least part of the information contents of the second information, the fourth information and the fifth information can be configured by using one or more higher-layer parameters or preconfigured, that is, only a part of the above information contents can be included in the second information, the fourth information and the fifth information, and the rest can be configured by using one or more higher-layer parameters or preconfigured.

The above positioning measurement quantity type can include indicating the measurement quantity to be measured, for example, SL-PRS RSRP, SL-PRS receive-transport time difference of the device, relative time of arrival (RTOA), reference signal time difference (RSTD), arrival of angle (AOA), angel of departure (AOD), and the like.

The above positioning assistance information can include at least one of speed, moving direction, acceleration, position coordinate information, identity ID, SL-SSB time-frequency configuration information, identity information related to the first device or the second devices, or the like.

The above positioning reference signal search assistance information includes at least one of an expected reference signal time difference (a time difference of transmitting the SL-PRS between the first device with other adjacent first devices and a transmission delay difference) or a search window (corresponding to the uncertainty of the transmission delay difference). The positioning reference signal search assistance information can also be configured by using one or more higher-layer parameters or preconfigured.

The above positioning method or capability information is used to indicate the method used in the current positioning process, for example, Multi-RTT positioning, TDOA positioning, AOA positioning or AOD positioning.

The above positioning type information is used to distinguish whether the current positioning method is used to relative positioning, ranging and absolute positioning.

The above measurement window indication information includes starting location information of the measurement window, period information, and the like.

The above positioning calculation function indication information is used to display whether the current device supports the positioning calculation function or only reports the measurement quantity for assistance positioning.

The above measurement assistance information includes at least one of SL-PRS information (for example, SL-PRS resource set ID, SL-PRS resource ID, SL-PRS specific time-frequency resource location information, SL-PRS configuration information, sequence initialization ID, and the like) used to indicate the correlation of the target device when measuring the positioning measurement value of the device, or a reporting granularity of the positioning measurement value of the SL-PRS of the device.

The above positioning reference signal configuration parameter set includes at least one of SL-PRS resource type, power control parameter, sequence ID, SL-PRS resource ID, SL-PRS resource set ID, frequency domain comb size, frequency domain offset between symbols, cyclic shift parameter, time domain starting position, starting symbol position mapped in slot, number of occupied symbols in time domain, time domain period of the SL-PRS, number or duration of the SL-PRS periods, starting position of frequency domain, frequency domain offset value relative to frequency domain reference point, number of bandwidth or RB occupied by frequency domain, subcarrier interval of the SL-PRS, cyclic prefix type or priority information of the SL-PRS.

The above SL-PRS resource type can be used to indicate that the resource of the SL-PRS is one of periodic, aperiodic or semi-persistent.

The above relative reference point in a time-frequency domain can be a resource time-frequency position that maps the positioning request signaling or the positioning indication signaling, or a reference time-frequency position configured by using one or more higher-layer parameters or preconfigured.

The above SL-PRS configuration parameter set can indicate related configurations of the SL-PRS transmitted by the first device and/or the second devices.

Some or all of the parameters in the above SL-PRS configuration parameter set can also be configured by using one or more higher-layer parameters or preconfigured, and related parameters configured by using one or more higher-layer parameters or preconfigured do not need to appear in the first information or the third information.

The above cyclic prefix type is used to indicate whether a current CP is a normal CP or an extended CP.

The priority of the SL-PRS can also be determined based on a priority of the physical channel associated with the SL-PRS or a priority value carried in associated control signaling.

The above positioning measurement value includes at least one of RSTD, SL-PRS RSRP, a receive-transport time difference of the first device, receive-transport time differences of the second devices, SL-PRS SINR/SNR, RTOA, AOA, AOD, transmission delay of the strongest path (which can assist in removing some erroneous distance estimates), delay difference between multiple paths, or longitude/latitude/altitude.

The quality indication information of the above measurement values includes at least one of error resolution, error value (indicated in combination with error resolution), or the number of error sampling points.

The above positioning reference signal search assistance information includes at least one of an expected reference signal time difference (a time difference of transmitting the SL-PRS between the first device with other adjacent first devices and a transmission delay difference) or a search window (corresponding to the uncertainty of the transmission delay difference). The SL-PRS search assistance information can also be configured by using one or more higher-layer parameters or preconfigured.

In one possible embodiment, in the case that the time interval information is carried in target information, or the time interval information is configured by using one or more higher-layer parameters or preconfigured, where the target information is at least one of the first information, second information, fourth information or fifth information, the time interval information satisfies at least one of:
(1) when a transmission of a positioning reference signal is activated or scheduled by the target information, the time interval information is a time interval between a time domain starting transmission position of the positioning reference signal and a target time domain reference point, where the target time domain reference point is a slot position where the target information is transmitted, or a time domain reference point in the target information, or a time domain reference point configured by using one or more higher-layer parameters, or a preconfigured time domain reference point;
(2) in the case that the target information supports retransmission, retransmitted target information does not carry the time interval information;
(3) in the case that the target information supports retransmission and the retransmitted target information carries the time interval information, the target time domain reference point of the time interval information is the slot position where the first information is retransmitted;
(4) in the case that the target information supports retransmission and the retransmitted target information carries the time interval information and the time domain reference point, the starting position of transmitting the positioning reference signal is determined based on the currently transmitted target information; or
(5) a granularity of the time interval information includes at least one of slot, physical slot, logical slot, OFDM symbol or subframe.

In one possible embodiment, in the case that the feedback latency bound information is carried in target information, or the feedback latency bound information is configured by using one or more higher-layer parameters or preconfigured, where the target information is at least one of the first information, the second information, the fourth information or the fifth information.

The method further includes at least one of the followings.
(1) Receiving, by the first device, feedback information corresponding to the target information from the second devices within the feedback latency bound information.
   Specifically,
   in the case that the first information includes the feedback latency bound information, the first device receives the second information from the second devices within the feedback latency bound information;
   in the case that the second information includes the feedback latency bound information, the first device receives the fourth information from the second devices within the feedback latency bound information;
   in the case that the fourth information includes the feedback latency bound information, the first device receives the fifth information from the second devices within the feedback latency bound information.
(2) Completing, by the first device, an overall positioning process within the feedback latency bound information.

The feedback latency bound information satisfies at least one of:
(1) the feedback latency bound information is an upper limit of a feedback time of the target information;
(2) a target time domain reference point of the feedback latency bound information is a time domain reference point configured by using one or more higher-layer parameters or preconfigured, or carried in the target information;
(3) in the case that the target information supports retransmission, retransmitted target information does not carry the feedback latency bound information;
(4) the target time domain reference point of the feedback latency bound information is a time when the target information is transmitted in a system, and a time granularity of the system includes at least one of slot, physical slot, logical slot, OFDM symbol or subframe;
(5) the target time domain reference point of the feedback latency bound information is an universal time coordinated (UTC) time;
(6) in the case that the target information supports retransmission and the retransmitted target information carries the feedback latency bound information, the target time domain reference point of the feedback latency bound information is the slot position where the first information is retransmitted;
(7) in the case that the target information supports retransmission and the retransmitted target information carries the time interval information and the time domain reference point, the target time domain reference point of the feedback latency bound information is a time domain reference point carried in currently transmitted target information; or
(8) when the target information supports at least one of retransmission, periodic transmission, aperiodic transmission or semi-persistent transmission, the transmission of the target information satisfies the implementation of the feedback latency bound information.

In one possible embodiment, the method further includes at least one of:
(1) carrying, by the first device, the positioning measurement value identification information in the fourth information, where the positioning measurement value identification information is used to indicate the first positioning reference signal and the second positioning reference signals associated with the first positioning measurement value;
   the positioning measurement value identification information includes at least one of:
   (1.1) related information of measuring the positioning reference signals, including at least part of the positioning reference signal configuration information;
   (1.2) a time stamp of the first positioning reference signal and/or time stamps of the second positioning reference signals associated with the positioning measurement value; or
   (1.3) positioning measurement value ID;
(2) presetting time parameters when the first device transmits the first positioning reference signal and time parameters when the second devices transmit the second positioning reference signals, where the time parameters include at least one of a positioning reference signal transmission period, an offset value in the period or a period reference point;
(3) ensuring that the first device and the second devices measure the first positioning reference signal and the second positioning reference signals in a same measurement window according to an indication of the measurement window indication information; or
(4) carrying, by the first device, device identity information of the first device in the fourth information.

Considering that if a plurality of second devices assist the first device in positioning measurement, it is necessary to transmit the positioning measurement values corresponding to the second devices. The above methods (1)-(4) can be used to ensure that the positioning measurement value of the first device and the positioning measurement values of second devices used in the location calculation are matched with each other.

In one possible embodiment, transmitting, by the first device, the first information to one or more second devices in step 201 includes:

transmitting, by the first device, the first information to the second devices through a third device.

In the embodiment of the present disclosure, for a scenario where the third device assists in positioning interaction between the first device with the second devices, the first device can transmit the first information to the third device.

The method further includes:
transmitting, by the first device, the measurement result of the first positioning reference signal and the measurement results of the second positioning reference signals to the third device, and receiving the positioning calculation result of the first device from the third device.

In the embodiment of the present disclosure, for the scenario where the third device assists in positioning interaction between the first device with the second devices, the first device transmits the measurement values of the positioning reference signals to the third device, the third device performs positioning calculation, and then transmits the positioning calculation result to the first device.

That is, compared with the positioning interaction method between the first device with the second devices described above, for the scenario where the third device assists in positioning interaction between the first device with the second devices, the first device interacts with the second devices through the positioning reference signals, and the interaction processing with the information and the measurement values is performed by the third device.

The above third device can be location management functions (LMFs) or other network elements, and the embodiment of the present disclosure does not limit the specific type of the third device.

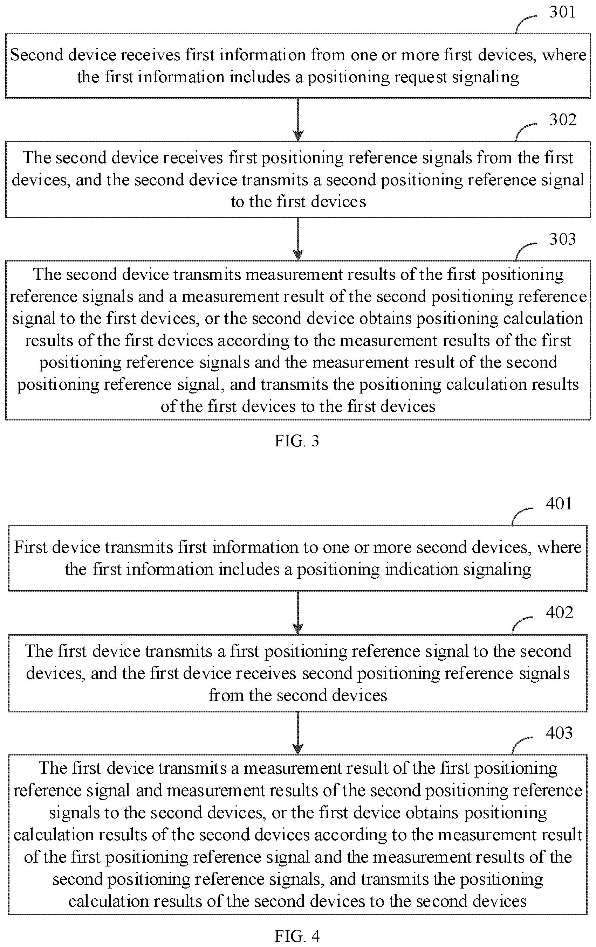

Referring to FIG. 3, an embodiment of the present disclosure provides a positioning method for a sidelink. An execution subject of the method is a second device, which can be a user equipment. Correspondingly, a peer device that communicates with and interacts with the second device is one or more first devices, which can also be the user equipment. The first devices communicates with the second device through the sidelink. The method includes:
step 301, a second device receives first information from one or more first devices, where the first information includes a positioning request signaling;
step 302, the second device receives first positioning reference signals from the first devices, and the second device transmits a second positioning reference signal to the first devices; and
step 303, the second device transmits measurement results of the first positioning reference signals and a measurement result of the second positioning reference signal to the first devices, or the second device obtains positioning calculation results of the first devices according to the measurement results of the first positioning reference signals and the measurement result of the second positioning reference signal, and transmits the positioning calculation results of the first devices to the first devices.

The method flow of the second device shown in FIG. 3 is a peer device flow corresponding to the method of the first device shown in FIG. 2. Therefore, information, parameters, information contents, and the like involved in the following can be understood with reference to the corresponding descriptions in the method side of the first device, which will not be described in detail in the method side of the second device.

In one possible embodiment, the first information includes at least one of the followings.
(1) Signaling type information of the first information, including at least one of positioning reference signal request signaling or a positioning request flag bit. The positioning reference signal request signaling is used to trigger at least one second device to assist the first device in positioning or ranging. The positioning request flag bit is used to distinguish current information as the positioning request signaling.
(2) Identification information, including at least one of destination identification information, source identification information or a session process ID. The session process ID indicates ID information of the positioning process. Since the first device can request a plurality of second devices to assist in positioning, the measured positioning reference signals and the second devices corresponding to the measured positioning reference signals can be determined through the session process ID, thereby preventing incorrect corresponding of the positioning reference signals in the process of interacting with a plurality of second devices.
(3) Positioning reference signal configuration information, including at least one of positioning reference signal configuration parameters, time interval information or a time domain reference point.
(4) Positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

It should be noted that at least a part of information contents of the first information can be configured by using one or more higher-layer parameters or preconfigured, that is, only a part of the information contents mentioned above can be included in the first information, and the rest can be configured by using one or more higher-layer parameters or preconfigured.

In one possible embodiment, receiving, by the second device, the first positioning reference signals from the first devices, and transmitting, by the second device, the second positioning reference signal to the first devices in step 302 includes:
(1) receiving, by the second device, the first positioning reference signals from the first devices; and
(2) transmitting, by the second device, second information and the second positioning reference signal to the first devices, where the second information is feedback information of the first information;
transmitting, by the second device, the measurement results of the first positioning reference signals and the measurement result of the second positioning reference signal to the first devices in step 303 includes:
(1) performing, by the second device, positioning measurement according to the first information and/or target positioning reference signals to obtain a second positioning measurement value, where the target positioning reference signals include the first positioning reference signals and the second positioning reference signal; and
(2) transmitting, by the second device, the second positioning measurement value to the first devices through the second information.

In one possible embodiment, receiving, by the second device, the first positioning reference signals from the first devices, and transmitting, by the second device, the second positioning reference signal to the first devices in step 302 includes:
(1) transmitting, by the second device, second information and the second positioning reference signal to the first devices, where the second information is feedback information of the first information;
(2) receiving, by the second device, fourth information and the first positioning reference signals from the first devices, where the fourth information is feedback information of the second information; and
(3) transmitting, by the second device, fifth information to the first devices, where the fifth information is feedback information of the fourth information.

In one possible embodiment, transmitting, by the second device, the measurement results of the first positioning reference signals and the measurement result of the second positioning reference signal to the first devices in step 303 includes:
performing, by the second device, positioning measurement according to the fourth information and/or target positioning reference signals to obtain a second positioning measurement value, where the target positioning reference signals include the first positioning reference signals and the second positioning reference signal; and
transmitting, by the second device, the second positioning measurement value to the first devices through the fifth information;
obtaining, by the second device, the positioning calculation results of the first devices according to the measurement results of the first positioning reference signals and the measurement result of the second positioning reference signal, and transmitting the positioning calculation results of the first devices to the first devices in step 303 includes:
   (1) performing, by the second device, positioning measurement according to the fourth information and/or target positioning reference signals to obtain a second positioning measurement value, where the target positioning reference signals include the first positioning reference signals and the second positioning reference signal;
   (2) receiving, by the second device, first positioning measurement values measured by the first devices from the first devices through the fourth information;
   (3) obtaining, by the second device, the positioning calculation results of the first devices according to the fourth information and/or target positioning measurement values, where the target positioning measurement values include the first positioning measurement values and the second positioning measurement value; and
   (4) transmitting, by the second device, the positioning calculation results of the first devices to the first devices through the fifth information.

In one possible embodiment, information contents of the second information, the fourth information and the fifth information appearing in the above interaction process include at least one of:
(1) at least part of the third information;
(2) a positioning measurement value;
(3) a time stamp of the positioning measurement value;
(4) quality indication of the positioning measurement value;
(5) positioning measurement value identification information; or
(6) positioning calculation result information,

The third information includes at least one of:
(1.1) signaling type information of the third information, including at least one of positioning reference signal request signaling or a positioning request flag bit;
(1.2) identification information, including at least one of destination identification information, source identification information or a session process ID;
(1.3) positioning reference signal configuration information, including at least one of positioning reference signal configuration parameters, time interval information or a time domain reference point; or
(1.4) positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

It should be noted that the second information, the fourth information and the fifth information are the same as the first information mentioned above, and at least part of the information contents of the second information, the fourth information and the fifth information can be configured by using one or more higher-layer parameters or preconfigured, that is, only a part of the above information contents can be included in the second information, the fourth information and the fifth information, and the rest can be configured by using the one or more higher-layer parameters or preconfigured.

In one possible embodiment, in the case that the time interval information is carried in target information, or the time interval information is configured by using one or more higher-layer parameters or preconfigured, the time interval information satisfies at least one of:
(1) when a transmission of a positioning reference signal is activated or scheduled by the target information, the time interval information is a time interval between a time domain starting transmission position of the positioning reference signal and a target time domain reference point, where the target time domain reference point is a slot position where the target information is transmitted, or a time domain reference point in the target information, or a time domain reference point configured by using one or more higher-layer parameters, or a preconfigured time domain reference point;
(2) in the case that the target information supports retransmission, retransmitted target information does not carry the time interval information;
(3) in the case that the target information supports retransmission and the retransmitted target information carries the time interval information, the target time domain reference point of the time interval information is the slot position where the first information is retransmitted;
(4) in the case that the target information supports retransmission and the retransmitted target information carries the time interval information and the time domain reference point, the starting position of transmitting the positioning reference signal is determined based on the currently transmitted target information; or
(5) a granularity of the time interval information includes at least one of slot, physical slot, logical slot, OFDM symbol or subframe,
where the target information is at least one of the first information, second information, fourth information or fifth information.

In one possible embodiment, in the case that the feedback latency bound information is carried in target information, or the feedback latency bound information is configured by using one or more higher-layer parameters or preconfigured, the method further includes at least one of the following.
(1) Receiving, by the first device, feedback information corresponding to the target information from the second devices within the feedback latency bound information.
   Specifically,
   in the case that the first information includes the feedback latency bound information, the second devices transmit the second information to the first device within the feedback latency bound information;
   in the case that the second information includes the feedback latency bound information, the second devices transmit the fourth information to the first device within the feedback latency bound information;
   in the case that the fourth information includes the feedback latency bound information, the second devices transmit the fifth information to the first device within the feedback latency bound information.
(2) Completing, by the first device, an overall positioning process within the feedback latency bound information.

The feedback latency bound information satisfies at least one of:
(1) the feedback latency bound information is an upper limit of a feedback time of the target information;
(2) a target time domain reference point of the feedback latency bound information is a time domain reference point configured by using one or more higher-layer parameters or preconfigured, or carried in the target information;
(3) in the case that the target information supports retransmission, retransmitted target information does not carry the feedback latency bound information;
(4) the target time domain reference point of the feedback latency bound information is a time when the target information is transmitted in a system, and a time granularity of the system includes at least one of slot, physical slot, logical slot, OFDM symbol or subframe;
(5) the target time domain reference point of the feedback latency bound information is an UTC time;
(6) in the case that the target information supports retransmission and the retransmitted target information carries the feedback latency bound information, the target time domain reference point of the feedback latency bound information is the slot position where the first information is retransmitted;
(7) in the case that the target information supports retransmission and the retransmitted target information carries the time interval information and the time domain reference point, the target time domain reference point of the feedback latency bound information is a time domain reference point carried in currently transmitted target information; or
(8) when the target information supports at least one of retransmission, periodic transmission, aperiodic transmission or semi-persistent transmission, the transmission of the target information satisfies the implementation of the feedback latency bound information.

In one possible embodiment, the method further includes at least one of:
(1) carrying, by the first device, the positioning measurement value identification information in the fourth information, where the positioning measurement value identification information is used to indicate the first positioning reference signals and the second positioning reference signal associated with the first positioning measurement value;
   the positioning measurement value identification information includes at least one of:
   (1.1) related information of measuring the positioning reference signals, including at least part of the positioning reference signal configuration information;
   (1.2) time stamps of the first positioning reference signals and/or a time stamp of the second positioning reference signal associated with the positioning measurement value; or
   (1.3) positioning measurement value ID;
(2) presetting time parameters when the first device transmits the first positioning reference signals and time parameters when the second devices transmit the second positioning reference signal, where the time parameters include at least one of a positioning reference signal transmission period, an offset value in the period or a period reference point;
(3) ensuring that the first device and the second devices measure the first positioning reference signals and the second positioning reference signal in a same measurement window according to an indication of the measurement window indication information; or
(4) carrying, by the first device, device identity information of the first device in the fourth information.

Considering that if a plurality of second devices assist the first device in positioning measurement, it is necessary to transmit the positioning measurement values corresponding to the second devices. The above methods (1)-(4) can be used to ensure that the positioning measurement value of the first device and the positioning measurement values of second devices used in the location calculation are matched with each other.

In one possible embodiment, receiving, by the second device, the first information from one or more first devices in step 201 includes:
receiving, by the second device, the first information from the second devices through a third device;
the method further includes:
   transmitting, by the second device, the measurement results of the first positioning reference signals and the measurement result of the second positioning reference signal to the third device, obtaining, by the third device, the positioning calculation results of the first devices, and transmitting, by the third device, the positioning calculation results of the first devices to the first devices.

In the embodiment of the present disclosure, for the scenario where the third device assists in positioning interaction between the first devices with the second device, the second device transmits the measurement values of the positioning reference signals to the third device, the third device performs positioning calculation, and then transmits the positioning calculation results to the first devices.

That is, compared with the positioning interaction method between the first devices with the second device described above, for the scenario where the third device assists in positioning interaction between the first devices with the second device, the first devices interact with the second device through the positioning reference signals, and the interaction processing with the information and the measurement values is performed by the third device.

The above third device can be LMFs or other network elements, and the embodiment of the present disclosure does not limit the specific type of the third device.

Referring to FIG. 4, an embodiment of the present disclosure provides a positioning method for a sidelink. An execution subject of the method is a first device, which can be a user equipment. Correspondingly, a peer device that communicates with and interacts with the first device is one or more second devices, which can also be the user equipment. The first device communicates with the second devices through the sidelink. The method includes the following steps.

Step 401, a first device transmits first information to one or more second devices, where the first information includes a positioning indication signaling.

In the embodiment of the present disclosure, the first information includes a positioning indication signaling, which is used to indicate to one or more second devices that the first device assists the second devices in positioning (or ranging). One or more first devices can transmit the first information to the second devices, that is, one or more first devices can assist the second devices in positioning (or ranging).

Step 402, the first device transmits a first positioning reference signal to the second devices, and the first device receives second positioning reference signals from the second devices.

In the embodiment of the present disclosure, the first device interacts with the second devices through positioning reference signals. The first device transmits the first positioning reference signal (which can be abbreviated as the first PRS, the first SL-PRS, or the like, and the present disclosure is not limited to this) to the second devices, and the second devices transmit the second positioning reference signals (which can be abbreviated as the second PRSs, the second SL-PRSs, or the like, and the present disclosure is not limited to this) to the first device.

It should be noted that a specific information transmission sequence flow of the interaction between the first device with the second devices through positioning reference signals can be implemented in various methods, which will be described in detail later.

Step 403, the first device transmits a measurement result of the first positioning reference signal and measurement results of the second positioning reference signals to the second devices, or the first device obtains positioning calculation results of the second devices according to the measurement result of the first positioning reference signal and the measurement results of the second positioning reference signals, and transmits the positioning calculation results of the second devices to the second devices.

In the embodiment of the present disclosure, the first device can transmit the measurement result of the first positioning reference signal and the measurement results of the second positioning reference signals to the second devices, and the second devices can perform positioning calculation, that is, the location calculation can be performed by the second devices; or the first device can obtain the positioning calculation results of the second devices according to the measurement result of the first positioning reference signal and the measurement results of the second positioning reference signals, that is, the location calculation can be performed by the first device, and then the positioning calculation results can be transmitted to the second devices.

The measurement result of the first positioning reference signal and the measurement results of the second positioning reference signals mentioned above can specifically be receive-transport time differences between the first positioning reference signal with the second positioning reference signals, that is, the first device measures time differences between transmitting of the first PRS with receiving of the second PRSs, and the second devices measure time differences between transmitting of the second PRSs and receiving of the first PRS. By combining the time differences measured by the first device and the second devices, RTTs between the first device with the second devices can be calculated, and the final positioning calculation can be performed according to the round-trip times, thereby realizing the positioning method based on RTT.

In one possible embodiment, the first information includes at least one of the followings.
(1) The signaling type information of the first information, including at least one of positioning reference signal indication signaling or a positioning indication flag bit. The positioning reference signal indication signaling is used to notify the second devices that the first device can assist the second devices in positioning or ranging. The positioning indication flag bit is used to distinguish the current information as positioning indication signaling.
(2) Identification information, including at least one of destination identification information, source identification information or a session process ID. The session process ID indicates ID information of the positioning process. Since the first device can request a plurality of second devices to assist in positioning, the measured positioning reference signals and the second devices corresponding to the measured positioning reference signals can be determined through the session process ID, thereby preventing incorrect corresponding of the positioning reference signals in the process of interacting with a plurality of second devices.
(3) Positioning reference signal configuration information, including at least one of positioning reference signal configuration parameters, time interval information or a time domain reference point.
(4) Positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

It should be noted that at least a part of information contents of the first information can be configured by using one or more higher-layer parameters or preconfigured, that is, only a part of the information contents mentioned above can be included in the first information, and the rest can be configured by using one or more higher-layer parameters or preconfigured.

In one possible embodiment, transmitting, by the first device, the first positioning reference signal to the second devices, and receiving, by the first device, the second positioning reference signals from the second devices in step 402 includes:
(1) receiving, by the first device, second information and the second positioning reference signals from the second devices, where the second information is feedback information of the first information; and
(2) transmitting, by the first device, fourth information and the first positioning reference signal to the second devices, where the fourth information is feedback information of the second information.

In the embodiment of the present disclosure, an information interaction process between the first device with the second devices is that the second devices first transmit the second information and the second positioning reference signals to the first device, the second information and the second positioning reference signals can be transmitted at the same time or at different times, that is, the second information and the second positioning reference signals can be transmitted together in the same slot or in different slots respectively. It should be noted that this rule is also followed in the following descriptions when describing other steps of transmitting a plurality of information, that is, the plurality of information can be transmitted at the same time or at different times, and will not be repeated. After receiving the second information and the second positioning reference signals, the first device transmits the fourth information and the first positioning reference signal to the second devices, where the fourth information and the first positioning reference signals can be transmitted at the same time or at different times.

Transmitting, by the first device, the measurement result of the first positioning reference signal and the measurement results of the second positioning reference signals to the second devices in step 403 includes:
(1) performing, by the first device, positioning measurement according to the second information and/or target positioning reference signals to obtain a first positioning measurement value, where the target positioning reference signals include the first positioning reference signals and the second positioning reference signals; and
(2) transmitting, by the first device, the first positioning measurement value to the second devices through the fourth information.

In the embodiment of the present disclosure, corresponding to the above interaction process, the first device measures the first positioning reference signal and the second positioning reference signals to obtain the first positioning measurement value, and then transmits the first positioning measurement value to the second devices. It should be noted that the measurement results of the first positioning reference signal and the second positioning reference signals measured by the first device are referred to as the first positioning measurement value, and the measurement results of the first positioning reference signal and the second positioning reference signals measured by the second devices are referred to as the second positioning measurement value. This naming method will also be followed in the following descriptions, and will not be repeated.

In the process of performing positioning measurement by the first device to obtain the first positioning measurement value, the first device can perform measurement according to the first positioning reference signal and the second positioning reference signals, that is, the first device directly measures the first positioning reference signal and the second positioning reference signals. Alternatively, the first device can perform measurement according to the second information, the first positioning reference signal and the second positioning reference signals, where the second information can carry configuration information or assistance information related to positioning measurement and is used for the first device to perform positioning measurement.

In the embodiment of the present disclosure, it is corresponding that the positioning calculation is performed by the second devices. After receiving the first positioning measurement value from the first device, the second device performs the positioning calculation according to the first positioning measurement value and the second positioning measurement values measured by the second devices themselves. In the process of performing positioning calculation by the second devices, the second devices can perform positioning calculation according to the first positioning measurement value and the second positioning measurement values, or the second devices can also perform positioning calculation according to the first information or the fourth information and the first positioning measurement value and the second positioning measurement values. The first information or the fourth information can carry configuration information or assistance information related to positioning calculation for the second devices to perform positioning measurement, or the first information or the fourth information can carry coordinate information and position information of the first device for performing positioning calculation by the second devices in an absolute positioning scenario.

In one possible embodiment, transmitting, by the first device, the first positioning reference signal to the second devices, and receiving, by the first device, the second positioning reference signals from the second devices in step 402 includes:
(1) transmitting, by the first device, the first positioning reference signal to the second devices;
(2) receiving, by the first device, second information and the second positioning reference signals from the second devices, where the second information is feedback information of the first information; and
(3) transmitting, by the first device, fourth information to the second devices, where the fourth information is feedback information of the second information;

transmitting, by the first device, the measurement result of the first positioning reference signal and the measurement results of the second positioning reference signals to the second devices in step 403 includes:
   (1) performing, by the first device, positioning measurement according to the second information and/or target positioning reference signals to obtain a first positioning measurement value, where the target positioning reference signals include the first positioning reference signals and the second positioning reference signals; and
   (2) transmitting, by the first device, the first positioning measurement value to the second devices through the fourth information;
obtaining, by the first device, the positioning calculation results of the second devices according to the measurement result of the first positioning reference signal and the measurement results of the second positioning reference signals, and transmitting the positioning calculation results of the second devices to the second devices in step 403 includes:
   (1) performing, by the first device, positioning measurement according to the second information and/or target positioning reference signals to obtain a first positioning measurement value, where the target positioning reference signals include the first positioning reference signal and the second positioning reference signals;
   (2) receiving, by the first device, second positioning measurement values measured by the second devices from the second devices through the second information;
   (3) obtaining, by the first device, the positioning calculation results of the second devices according to the second information and/or target positioning measurement values, where the target positioning measurement values include the first positioning measurement value and the second positioning measurement values; and
   (4) transmitting, by the first device, the positioning calculation results of the second devices to the second devices through the fourth information.

In the embodiment of the present disclosure, it is corresponding that the positioning calculation is performed by the first device. After the first device interacts with the second devices according to the above interaction process and the first positioning measurement value and the second positioning measurement values are obtained, the first device performs the positioning calculation. Specifically, the first device can perform positioning calculation according to the first positioning measurement value and the second positioning measurement values, or the first device can perform positioning calculation according to the second information, the first positioning measurement value and the second positioning measurement values.

In one possible embodiment, information contents of the second information and the fourth information appearing in the above interaction process include at least one of:
(1) at least part of the third information;
(2) a positioning measurement value;
(3) a time stamp of the positioning measurement value;
(4) quality indication of the positioning measurement value;
(5) positioning measurement value identification information; or
(6) positioning calculation result information,

The third information includes at least one of:
(1.1) signaling type information of the third information, including at least one of positioning reference signal request signaling or a positioning request flag bit;
(1.2) identification information, including at least one of destination identification information, source identification information or a session process ID;
(1.3) positioning reference signal configuration information, including at least one of positioning reference signal configuration parameters, time interval information or a time domain reference point; or
(1.4) positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

It should be noted that the second information and the fourth information are the same as the first information mentioned above, and at least part of the information contents of the second information and the fourth information can be configured by using one or more higher-layer parameters or preconfigured, that is, only a part of the above information contents can be included in the second information and the fourth information, and the rest can be configured by using one or more higher-layer parameters or preconfigured.

The above positioning measurement quantity type can include indicating the measurement quantity to be measured, for example, SL-PRS RSRP, SL-PRS receive-transport time difference of the device, relative time of arrival (RTOA), reference signal time difference (RSTD), arrival of angle (AOA), angel of departure (AOD), and the like.

The above positioning assistance information can include at least one of speed, moving direction, acceleration, position coordinate information, identity ID, SL-SSB time-frequency configuration information, identity information related to the first device or the second devices, or the like.

The above positioning reference signal search assistance information includes at least one of an expected reference signal time difference (a time difference and a transmission delay difference of transmitting the positioning reference signals between the first device with other adjacent first devices) or a search window (corresponding to the uncertainty of the transmission delay difference). The positioning reference signal search assistance information can also be configured by using one or more higher-layer parameters or preconfigured.

The above positioning method or capability information is used to indicate the method used in the current positioning process, for example, Multi-RTT positioning, TDOA positioning, AOA positioning or AOD positioning.

The above positioning type information is used to distinguish whether the current positioning method is used to relative positioning, ranging and absolute positioning.

The above measurement window indication information includes starting location information of the measurement window, period information, and the like.

The above positioning calculation function indication information is used to display whether the current device supports the positioning calculation function or only reports the measurement quantity for assistance positioning.

The above measurement assistance information includes at least one of SL-PRS information (for example, SL-PRS resource set ID, SL-PRS resource ID, SL-PRS specific time-frequency resource location information, SL-PRS configuration information, sequence initialization ID, and the like) used to indicate the correlation of the target device when measuring the positioning measurement value of the device, or a reporting granularity of the positioning measurement value of the SL-PRS of the device.

The above positioning reference signal configuration parameter set includes at least one of SL-PRS resource type, power control parameter, sequence ID, SL-PRS resource ID, SL-PRS resource set ID, frequency domain comb size, frequency domain offset between symbols, cyclic shift parameter, time domain starting position, starting symbol position mapped in slot, number of occupied symbols in time domain, time domain period of the SL-PRS, number or duration of the SL-PRS periods, starting position of frequency domain, frequency domain offset value relative to frequency domain reference point, number of bandwidth or RB occupied by frequency domain, subcarrier interval of the SL-PRS, cyclic prefix type or priority information of the SL-PRS.

The above SL-PRS resource type can be used to indicate that the resource of the SL-PRS is one of periodic, aperiodic or semi-persistent.

The above relative reference point in a time-frequency domain can be a resource time-frequency position that maps the positioning request signaling or the positioning indication signaling, or a reference time-frequency position configured by using one or more higher-layer parameters or preconfigured.

The above SL-PRS configuration parameter set can indicate related configurations of the SL-PRS transmitted by the first device and/or the second devices.

Some or all of the parameters in the above SL-PRS configuration parameter set can also be configured by using one or more higher-layer parameters or preconfigured, and related parameters configured by using one or more higher-layer parameters or preconfigured do not need to appear in the first information or the third information.

The above cyclic prefix type is used to indicate whether a current CP is a normal CP or an extended CP.

The priority of the SL-PRS can also be determined based on a priority of the physical channel associated with the SL-PRS or a priority value carried in associated control signaling.

The above positioning measurement value includes at least one of RSTD, SL-PRS RSRP, a receive-transport time difference of the first device, receive-transport time differences of the second devices, SL-PRS SINR/SNR, RTOA, AOA, AOD, transmission delay of the strongest path (which can assist in removing some erroneous distance estimates), delay difference between multiple paths, or longitude/latitude/altitude.

The quality indication information of the above measurement value includes at least one of error resolution, error value (indicated in combination with error resolution), or the number of error sampling points.

The above positioning reference signal search assistance information includes at least one of an expected reference signal time difference (a time difference of transmitting the SL-PRS between the first device with other adjacent first devices and a transmission delay difference) or a search window (corresponding to the uncertainty of the transmission delay difference). The SL-PRS search assistance information can also be configured by using one or more higher-layer parameters or preconfigured.

In one possible embodiment, in the case that the time interval information is carried in target information, or the time interval information is configured by using one or more higher-layer parameters or preconfigured, where the target information is at least one of the first information, second information, fourth information or fifth information, the time interval information satisfies at least one of:
(1) when a transmission of a positioning reference signal is activated or scheduled by the target information, the time interval information is a time interval between a time domain starting transmission position of the positioning reference signal and a target time domain reference point, where the target time domain reference point is a slot position where the target information is transmitted, or a time domain reference point in the target information, or a time domain reference point configured by using one or more higher-layer parameters, or a preconfigured time domain reference point;
(2) in the case that the target information supports retransmission, retransmitted target information does not carry the time interval information;
(3) in the case that the target information supports retransmission and the retransmitted target information carries the time interval information, the target time domain reference point of the time interval information is the slot position where the first information is retransmitted;
(4) in the case that the target information supports retransmission and the retransmitted target information carries the time interval information and the time domain reference point, the starting position of transmitting the positioning reference signal is determined based on the currently transmitted target information; or
(5) a granularity of the time interval information includes at least one of slot, physical slot, logical slot, OFDM symbol or subframe.

In one possible embodiment, in the case that the feedback latency bound information is carried in target information, or the feedback latency bound information is configured by using one or more higher-layer parameters or preconfigured, where the target information is at least one of the first information, the second information, the fourth information or the fifth information.

The method further includes at least one of the followings.
(1) Receiving, by the first device, feedback information corresponding to the target information from the second devices within the feedback latency bound information.
   Specifically,
   in the case that the first information includes the feedback latency bound information, the first device receives the second information from the second devices within the feedback latency bound information;
   in the case that the second information includes the feedback latency bound information, the first device receives the fourth information from the second devices within the feedback latency bound information;
   in the case that the fourth information includes the feedback latency bound information, the first device receives the fifth information from the second devices within the feedback latency bound information.
(2) Completing, by the first device, an overall positioning process within the feedback latency bound information.

The feedback latency bound information satisfies at least one of:
(1) the feedback latency bound information is an upper limit of a feedback time of the target information;
(2) a target time domain reference point of the feedback latency bound information is a time domain reference point configured by using one or more higher-layer parameters or preconfigured, or carried in the target information;
(3) in the case that the target information supports retransmission, retransmitted target information does not carry the feedback latency bound information;
(4) the target time domain reference point of the feedback latency bound information is a time when the target information is transmitted in a system, and a time granularity of the system includes at least one of slot, physical slot, logical slot, OFDM symbol or subframe;
(5) the target time domain reference point of the feedback latency bound information is an universal time coordinated (UTC) time;
(6) in the case that the target information supports retransmission and the retransmitted target information carries the feedback latency bound information, the target time domain reference point of the feedback latency bound information is the slot position where the first information is retransmitted;
(7) in the case that the target information supports retransmission and the retransmitted target information carries the time interval information and the time domain reference point, the target time domain reference point of the feedback latency bound information is a time domain reference point carried in currently transmitted target information; or
(8) when the target information supports at least one of retransmission, periodic transmission, aperiodic transmission or semi-persistent transmission, the transmission of the target information satisfies the implementation of the feedback latency bound information.

In one possible embodiment, the method further includes at least one of:
(1) carrying, by the first device, the positioning measurement value identification information in the fourth information, where the positioning measurement value identification information is used to indicate the first positioning reference signal and the second positioning reference signals associated with the first positioning measurement value;
   the positioning measurement value identification information includes at least one of:
   (1.1) related information of measuring the positioning reference signals, including at least part of the positioning reference signal configuration information;
   (1.2) a time stamp of the first positioning reference signal and/or time stamps of the second positioning reference signals associated with the positioning measurement value; or
   (1.3) positioning measurement value ID;
(2) presetting time parameters when the first device transmits the first positioning reference signal and time parameters when the second devices transmit the second positioning reference signals, where the time parameters include at least one of a positioning reference signal transmission period, an offset value in the period or a period reference point;
(3) ensuring that the first device and the second devices measure the first positioning reference signal and the second positioning reference signals in a same measurement window according to an indication of the measurement window indication information; or
(4) carrying, by the first device, device identity information of the first device in the fourth information.

Considering that if a plurality of first devices assist the second devices in positioning measurement, it is necessary to transmit the positioning measurement values corresponding to the second devices. The above methods (1)-(4) can be used to ensure that the positioning measurement value of the first devices and the positioning measurement values of second devices used in the location calculation are matched with each other.

In one possible embodiment, transmitting, by the first device, the first information to one or more second devices in step 201 includes:
transmitting, by the first device, the first information to the second devices through a third device.

In the embodiment of the present disclosure, for a scenario where the third device assists in positioning interaction between the first device with the second devices, the first device can transmit the first information to the third device.

The method further includes:
transmitting, by the first device, the measurement result of the first positioning reference signal and the measurement results of the second positioning reference signals to the third device, and receiving the positioning calculation result of the first device from the third device.

In the embodiment of the present disclosure, for the scenario where the third device assists in positioning interaction between the first device with the second devices, the first device transmits the measurement values of the positioning reference signals to the third device, the third device performs positioning calculation, and then transmits the positioning calculation result to the first device.

That is, compared with the positioning interaction method between the first device with the second devices described above, for the scenario where the third device assists in positioning interaction between the first device with the second devices, the first device interacts with the second devices through the positioning reference signals, and the interaction processing with the information and the measurement values is performed by the third device.

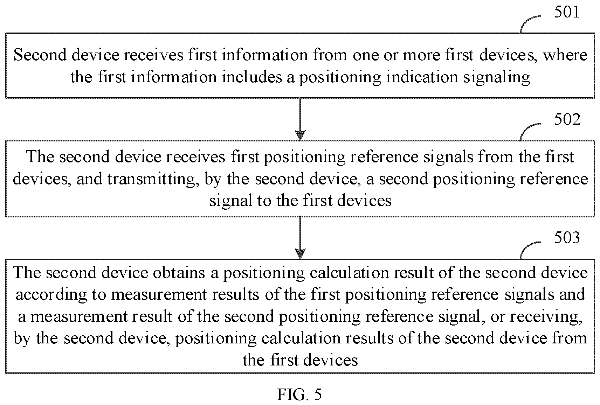

Referring to FIG. 5, an embodiment of the present disclosure provides a positioning method for a sidelink. An execution subject of the method is a second device, which can be a user equipment. Correspondingly, a peer device that communicates with and interacts with the second device is one or more first devices, which can also be the user equipment. The first device communicates with the second device through the sidelink. The method includes the following steps.

Step 501, a second device receives first information from one or more first devices, where the first information includes a positioning indication signaling.

Step 502, the second device receives first positioning reference signals from the first devices, and transmitting, by the second device, a second positioning reference signal to the first devices.

Step 503, the second device obtains a positioning calculation result of the second device according to measurement results of the first positioning reference signals and a measurement result of the second positioning reference signal, or receiving, by the second device, a positioning calculation result of the second device from one of the first devices.

The method flow of the second device shown in FIG. 5 is a peer device flow corresponding to the method of the first device shown in FIG. 4. Therefore, information, parameters, information contents, and the like involved in the following can be understood with reference to the corresponding descriptions in the method side of the first device, which will not be described in detail in the method side of the second device.

In one possible embodiment, the first information includes at least one of the followings.
(1) Signaling type information of the first information, including at least one of positioning reference signal request signaling or a positioning request flag bit. The positioning reference signal request signaling is used to trigger at least one second device to assist the first device in positioning or ranging. The positioning request flag bit is used to distinguish current information as the positioning request signaling.
(2) Identification information, including at least one of destination identification information, source identification information or a session process ID. The session process ID indicates ID information of the positioning process. Since the first device can request a plurality of second devices to assist in positioning, the measured positioning reference signals and the second devices corresponding to the measured positioning reference signals can be determined through the session process ID, thereby preventing incorrect corresponding of the positioning reference signals in the process of interacting with a plurality of second devices.
(3) Positioning reference signal configuration information, including at least one of positioning reference signal configuration parameters, time interval information or a time domain reference point.
(4) Positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

It should be noted that at least a part of information contents of the first information can be configured by using one or more higher-layer parameters or preconfigured, that is, only a part of the information contents mentioned above can be included in the first information, and the rest can be configured by using one or more higher-layer parameters or preconfigured.

In one possible embodiment, receiving, by the second device, the first positioning reference signals from the first devices, and transmitting, by the second device, the second positioning reference signal to the first devices in step 502 includes:
(1) transmitting, by the second device, second information and the second positioning reference signal to the first devices, where the second information is feedback information of the first information; and
(2) receiving, by the second device, fourth information and the first positioning reference signals from the first devices, where the fourth information is feedback information of the second information;
obtaining, by the second device, the positioning calculation result of the second device according to the measurement results of the first positioning reference signals and the measurement result of the second positioning reference signal in step 503 includes:
(1) performing, by the second device, positioning measurement according to the fourth information and/or target positioning reference signals to obtain a second positioning measurement value, where the target positioning reference signals include the first positioning reference signals and the second positioning reference signal;
(2) receiving, by the second device, first positioning measurement values measured by the first devices from the first devices through the fourth information; and
(3) obtaining, by the second device, positioning calculation results of the first devices according to second target information and/or target positioning measurement values, where the second target information is the first information or the fourth information, and the target positioning measurement values include the first positioning measurement values and the second positioning measurement value.

In one possible embodiment, receiving, by the second device, the first positioning reference signals from the first devices, and transmitting, by the second device, the second positioning reference signal to the first devices in step 502 includes:
(1) receiving, by the second device, the first positioning reference signals from the first devices;
(2) transmitting, by the second device, second information and the second positioning reference signal to the first devices, where the second information is feedback information of the first information; and
(3) receiving, by the second device, fourth information from the first devices, where the fourth information is feedback information of the second information;

obtaining, by the second device, the positioning calculation result of the second device according to the measurement results of the first positioning reference signals and the measurement result of the second positioning reference signal in step 503 includes:
   (1) performing, by the second device, positioning measurement according to the first information and/or target positioning reference signals to obtain a second positioning measurement value, where the target positioning reference signals include the first positioning reference signals and the second positioning reference signal;
   (2) receiving, by the second device, first positioning measurement values measured by the first devices from the first devices through the fourth information; and
   (3) obtaining, by the second device, the positioning calculation result of the second device according to second target information and/or target positioning measurement values, where the second target information is the first information or the fourth information, and the target positioning measurement values include the first positioning measurement values and the second positioning measurement value;
receiving, by the second device, the positioning calculation result of the second device from one of the first devices in step 503 includes:
   (1) performing, by the second device, positioning measurement according to the first information and/or target positioning reference signals to obtain a second positioning measurement value, where the target positioning reference signals include the first positioning reference signals and the second positioning reference signal;
   (2) transmitting, by the second device, the second positioning measurement value to the first devices through the second information; and
   (3) receiving, by the second device, the positioning calculation result of the second device from one of the first devices through the fourth information, where the positioning calculation result of the second device is obtained by the first devices according to the second information and/or target positioning measurement values, where the target positioning measurement values include the first positioning measurement values and the second positioning measurement value.

In one possible embodiment, information contents of the second information and the fourth information appearing in the above interaction process include at least one of:
(1) at least part of the third information;
(2) a positioning measurement value;
(3) a time stamp of the positioning measurement value;
(4) quality indication of the positioning measurement value;
(5) positioning measurement value identification information; or
(6) positioning calculation result information,

The third information includes at least one of:
(1.1) signaling type information of the third information, including at least one of positioning reference signal request signaling or a positioning request flag bit;
(1.2) identification information, including at least one of destination identification information, source identification information or a session process ID;
(1.3) positioning reference signal configuration information, including at least one of positioning reference signal configuration parameters, time interval information or a time domain reference point; or
(1.4) positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

It should be noted that the second information and the fourth information are the same as the first information mentioned above, and at least part of the information contents of the second information and the fourth information can be configured by using one or more higher-layer parameters or preconfigured, that is, only a part of the above information contents can be included in the second information and the fourth information, and the rest can be configured by using one or more higher-layer parameters or preconfigured.

In one possible embodiment, in the case that the time interval information is carried in target information, or the time interval information is configured by using one or more higher-layer parameters or preconfigured, the time interval information satisfies at least one of:
(1) when a transmission of a positioning reference signal is activated or scheduled by the target information, the time interval information is a time interval between a time domain starting transmission position of the positioning reference signal and a target time domain reference point, where the target time domain reference point is a slot position where the target information is transmitted, or a time domain reference point in the target information, or a time domain reference point configured by using one or more higher-layer parameters, or a preconfigured time domain reference point;
(2) in the case that the target information supports retransmission, retransmitted target information does not carry the time interval information;
(3) in the case that the target information supports retransmission and the retransmitted target information carries the time interval information, the target time domain reference point of the time interval information is the slot position where the first information is retransmitted;
(4) in the case that the target information supports retransmission and the retransmitted target information carries the time interval information and the time domain reference point, the starting position of transmitting the positioning reference signal is determined based on the currently transmitted target information; or
(5) a granularity of the time interval information includes at least one of slot, physical slot, logical slot, OFDM symbol or subframe,
where the target information is at least one of the first information, second information, fourth information or fifth information.

In one possible embodiment, in the case that the feedback latency bound information is carried in target information, or the feedback latency bound information is configured by using one or more higher-layer parameters or preconfigured, the method further includes at least one of the following.
(1) Receiving, by the first device, feedback information corresponding to the target information from the second devices within the feedback latency bound information.
   Specifically,
   in the case that the first information includes the feedback latency bound information, the second devices transmit the second information to the first device within the feedback latency bound information;
   in the case that the second information includes the feedback latency bound information, the second devices transmit the fourth information to the first device within the feedback latency bound information;
   in the case that the fourth information includes the feedback latency bound information, the second devices transmit the fifth information to the first device within the feedback latency bound information.
(2) Completing, by the first device, an overall positioning process within the feedback latency bound information.

The feedback latency bound information satisfies at least one of:
(1) the feedback latency bound information is an upper limit of a feedback time of the target information;
(2) a target time domain reference point of the feedback latency bound information is a time domain reference point configured by using one or more higher-layer parameters or preconfigured, or carried in the target information;
(3) in the case that the target information supports retransmission, retransmitted target information does not carry the feedback latency bound information;
(4) the target time domain reference point of the feedback latency bound information is a time when the target information is transmitted in a system, and a time granularity of the system includes at least one of slot, physical slot, logical slot, OFDM symbol or subframe;
(5) the target time domain reference point of the feedback latency bound information is an UTC time;
(6) in the case that the target information supports retransmission and the retransmitted target information carries the feedback latency bound information, the target time domain reference point of the feedback latency bound information is the slot position where the first information is retransmitted;
(7) in the case that the target information supports retransmission and the retransmitted target information carries the time interval information and the time domain reference point, the target time domain reference point of the feedback latency bound information is a time domain reference point carried in currently transmitted target information; or
(8) when the target information supports at least one of retransmission, periodic transmission, aperiodic transmission or semi-persistent transmission, the transmission of the target information satisfies the implementation of the feedback latency bound information.

In one possible embodiment, the method further includes at least one of:
(1) carrying, by the first device, the positioning measurement value identification information in the fourth information, where the positioning measurement value identification information is used to indicate the first positioning reference signal and the second positioning reference signals associated with the first positioning measurement value;
   the positioning measurement value identification information includes at least one of:
   (1.1) related information of measuring the positioning reference signals, including at least part of the positioning reference signal configuration information;
   (1.2) a time stamp of the first positioning reference signal and/or time stamps of the second positioning reference signals associated with the positioning measurement value; or
   (1.3) positioning measurement value ID;
(2) presetting time parameters when the first device transmits the first positioning reference signals and time parameters when the second devices transmit the second positioning reference signal, where the time parameters include at least one of a positioning reference signal transmission period, an offset value in the period or a period reference point;
(3) ensuring that the first device and the second devices measure the first positioning reference signal and the second positioning reference signals in a same measurement window according to an indication of the measurement window indication information; or
(4) carrying, by the first device, device identity information of the first device in the fourth information.

Considering that if a plurality of first devices assist the second devices in positioning measurement, it is necessary to transmit the positioning measurement values corresponding to the second devices. The above methods (1)-(4) can be used to ensure that the positioning measurement value of the first device and the positioning measurement values of second devices used in the location calculation are matched with each other.

In one possible embodiment, receiving, by the second device, the first information from one or more first devices in step 501 includes:
receiving, by the second device, the first information from the second devices through a third device;
the method further includes:
   transmitting, by the second device, the measurement results of the first positioning reference signals and the measurement result of the second positioning reference signal to the third device, and receiving the positioning calculation result of the second device from the third device.

In the embodiment of the present disclosure, for the scenario where the third device assists in positioning interaction between the first devices with the second device, the second device transmits the measurement values of the positioning reference signals to the third device, the third device performs positioning calculation, and then transmits the positioning calculation results to the first devices.

That is, compared with the positioning interaction method between the first devices with the second device described above, for the scenario where the third device assists in positioning interaction between the first devices with the second device, the first devices interact with the second device through the positioning reference signals, and the interaction processing with the information and the measurement values is performed by the third device.

The above third device can be LMFs or other network elements, and the embodiment of the present disclosure does not limit the specific type of the third device.

The technical solutions of the present disclosure will be described below with specific implementation examples.

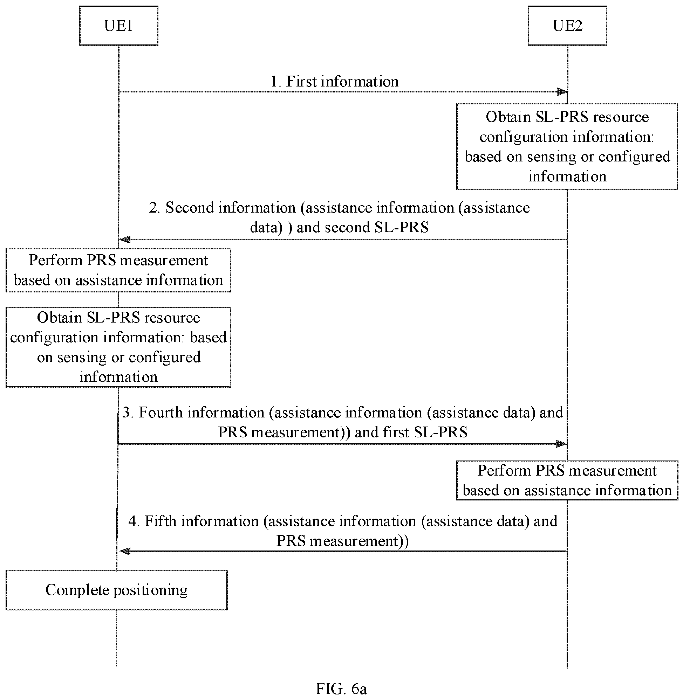

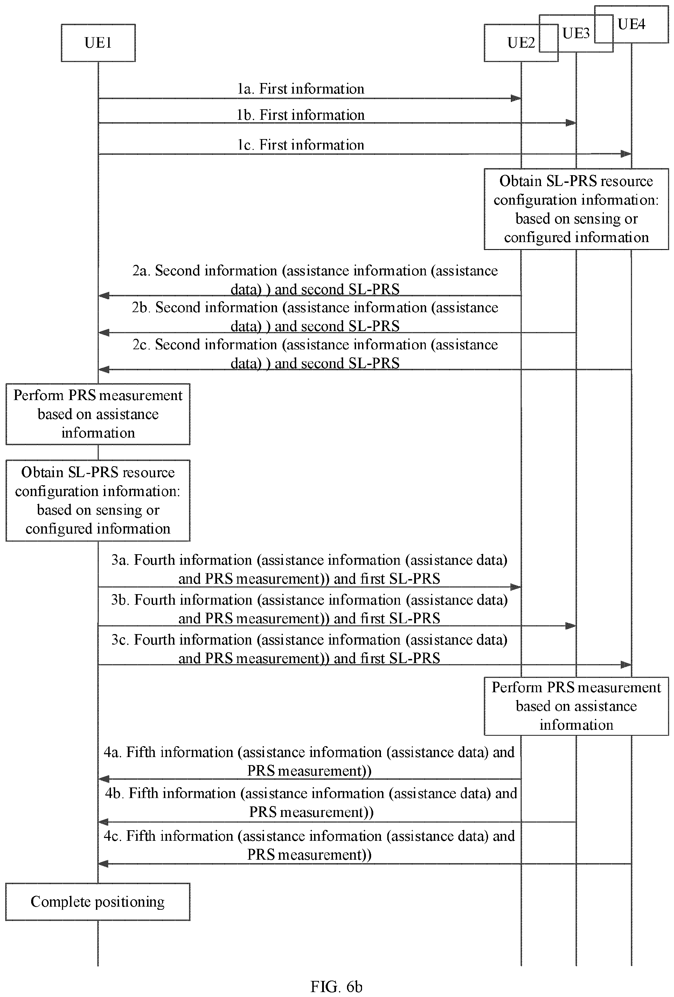

Example 1, first information includes a positioning request signaling, that is, one or more second devices assist a first device in positioning. Referring to FIG. 6a and FIG. 6b, FIG. 6a corresponds to a case that a second device (UE2) assists a first device (UE1), and FIG. 6b corresponds to a case that a plurality of second devices (UE2, UE3 and UE4) assist a first device (UE1). The specific flow is as follows.

Step 1, a first device transmits first information (the positioning request signaling) and requests one or more second devices to assist the first device in ranging or positioning. At the same time, the first device requests the second devices to transmit SL-PRSs.

Step 2, after receiving the positioning request signaling, each of the second devices determines a positioning method used in a positioning process according to contents of the positioning request signaling. A second SL-PRS is transmitted through a SL-PRS resource selection process or based on higher-layer parameters/preconfigured parameters and the first information.

If the SL-PRS of the second device is transmitted periodically (that is, periodic transmission), there is no need to trigger the second device; and if the SL-PRS of the second device is transmitted aperiodically or semi-persistently (that is, aperiodic transmission or semi-persistent transmission), the second device needs to be triggered by the first information or the second information. A specific transmission starting position depends on contents of the first information or the second information.

If the positioning process is used for absolute positioning, the second information should carry contents such as positioning assistance information. In addition, it is also possible to define positions of the SL-PRSs transmitted by a plurality of second devices in a time domain to be within a defined window, or to multiplex the same time domain resources.

The second information can also include contents such as SL-PRS search assistance information and measurement window indication information.

Step 3, the first device receives the second SL-PRS according to the second information and the higher-layer parameters or the preconfigured parameters, transmits a first SL-PRS, and measures a receive-transport time difference between receiving the second SL-PRS and transmitting the first SL-PRS. If the second device supports assisting in location calculation, a positioning measurement value can also be reported to the second device through fourth information; otherwise, there is no need to report the positioning measurement value to the second device.

If the SL-PRS of the first device is transmitted periodically, there is no need to trigger the first device; and if the SL-PRS of the first device is transmitted aperiodically or semi-persistently, the first device needs to be triggered by the second information or the fourth information. The specific transmission starting position depends on contents of the second or fourth information.

The fourth information can also include contents such as SL-PRS search assistance information and measurement window indication information.

Step 4, the second device performs corresponding positioning measurement according to the fourth information and the first SL-PRS. If the second device itself supports the location calculation and the first device reports the corresponding positioning measurement value, the second device can perform the location calculation and feedback a result of location calculation to the first device; otherwise, the second device reports a positioning measurement result back to the first device.

Step 5, the first device performs the location calculation by combining a receive-transport time difference between receiving the second SL-PRS and transmitting the first SL-PRS measured by the first device and a receive-transport time difference between transmitting the second SL-PRS and receiving the first SL-PRS reported by the second device, as well as positioning assistance data.

It should be noted that when performing the location calculation, it is necessary to ensure that measurement values of receive-transport time differences of the SL-PRSs of the two devices correspond to the same pair of the SL-PRSs or the SL-PRSs with close distance in time domain, so as not to affect the accuracy.

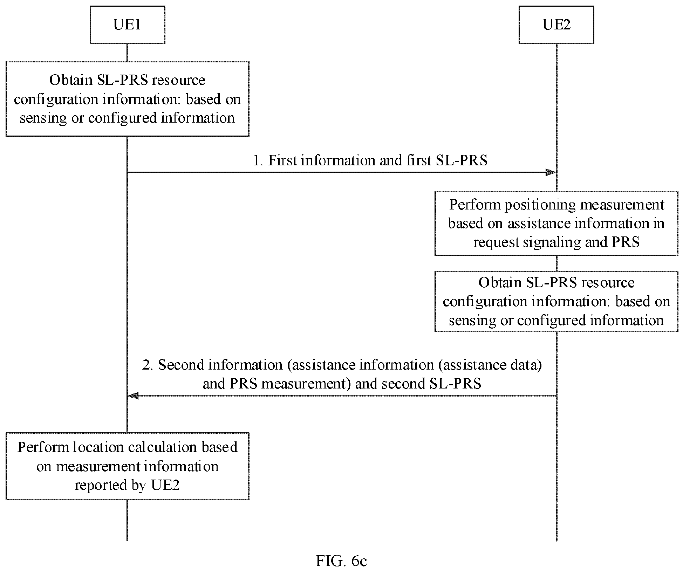

Example 2, first information includes a positioning request signaling, that is, one or more second devices assist a first device in positioning. Referring to FIG. 6c, FIG. 6c corresponds to a case that a second device (UE2) assists a first device (UE1). As for a case that a plurality of second devices assist a first device, it can be understood by combining FIG. 6b and FIG. 6c. The specific flow is as follows.

Step 1, a first device transmits first information (the positioning request signaling), and the first device also transmits a first SL-PRS and requests a second device to assist the first device in RTT positioning.

Step 2, the second device receives the first SL-PRS according to the first information and/or higher-layer parameters or preconfigured parameters, measures a receive-transport time difference between receiving the first SL-PRS and transmitting a second SL-PRS, and reports a measurement result back to the first device.

For an absolute positioning scenario, one or more second devices are required to report measurement information and positioning assistance information; when the SL-PRS is transmitted periodically or semi-persistently, a time domain position of the SL-PRS measured by each second device can be different, or a distance of the time domain position of the measured SL-PRS is too large, thereby resulting in a decrease of the positioning accuracy of the first device. To solve this problem,

a measurement interval of the second device can be defined by the first information, so as to ensure that the time domain positions of the SL-PRSs measured by a plurality of second devices are the same, or the measurement interval is kept within a certain window.

Alternatively, the second device can report a plurality of measurement quantities and simultaneously report a measurement timestamp and a timestamp corresponding to the SL-PRS (or time domain location information corresponding to the SL-PRS: subframe number and slot number, and the like), so as to ensure that the first device can select a corresponding measurement result from a plurality of positioning measurement results reported by the second devices for location calculation.

Step 3, the first device uses second information to receive the second SL-PRS, measures a receive-transport time difference between receiving the second SL-PRS and transmitting the first SL-PRS, and performs the location calculation to complete ranging or positioning.

It should be noted that when performing the location calculation, it is necessary to ensure that measurement values of receive-transport time differences of the SL-PRSs of the two devices correspond to the same pair of the SL-PRSs or the SL-PRSs with close distance in time domain, so as not to affect the accuracy.

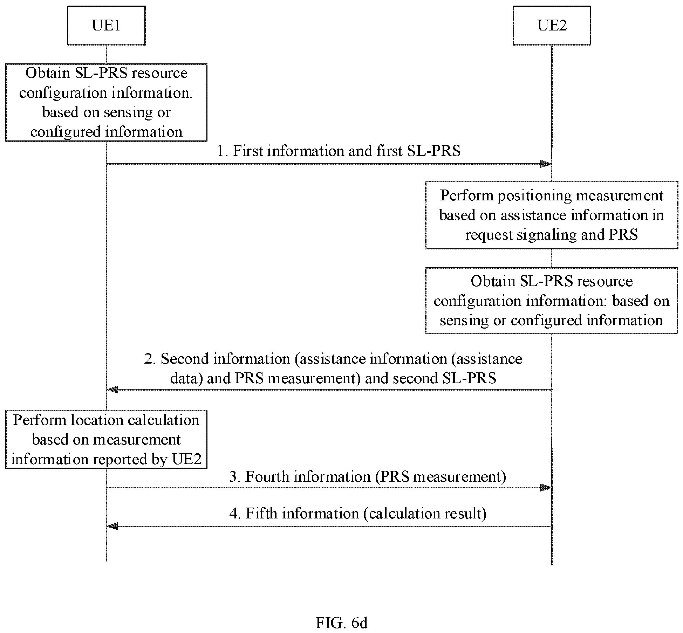

Example 3, first information includes a positioning request signaling, that is, one or more second devices assist a first device in positioning. Referring to FIG. 6d, FIG. 6d corresponds to a case that a second device (UE2) assists a first device (UE1). As for a case that a plurality of second devices assist a first device, it can be understood by combining FIG. 6b and FIG. 6d. The specific flow is as follows.

The difference between the flow of FIG. 6d and the flow of FIG. 6c is in that the location calculation is finally performed by the second device. The first device transmits the PRS measurement value to the second device through the fourth information, and the second device performs the location calculation, and then transmits the result of the location calculation to the first device through the fifth information.

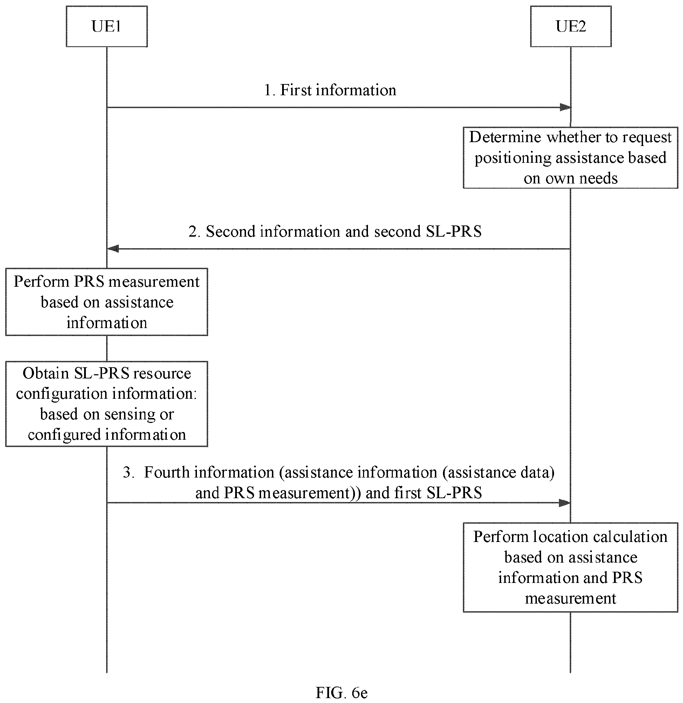

Example 4, first information includes a positioning indication signaling, that is, one or more first devices assist a second device in positioning. Referring to FIG. 6e, FIG. 6e corresponds to a case that a first device (UE1) assists a second device (UE2). As for a case that a plurality of first devices assist a second device, it can be understood by combining FIG. 6b and FIG. 6e. The specific flow is as follows.

Step 1, a first device transmits first information (the positioning indication signaling) to inform a second device that the first device itself can provide positioning functions for the second device.

The first information can include SL-PRS request signaling, positioning request/ positioning indication flag bit, destination identification information, source identification information, SL-PRS configuration parameters, positioning measurement quantity type information, positioning assistance information, SL-PRS search assistance information, and positioning method/capability information.

Step 2, after receiving the positioning indication signaling, the second device triggers a RTT positioning process, transmits second information to the first device, and transmits a second SL-PRS at the same time.

The second information can include SL-PRS request signaling, positioning request/ positioning indication flag bit, destination identification information, source identification information, feedback latency bound information, SL-PRS configuration parameters, positioning method/capability information, time interval information, a time domain reference point, measurement window indication information, and the like.

Step 3, after receiving the second information, the first device transmits a first SL-PRS and receives the second SL-PRS according to the second information or higher-layer parameters/preconfigured parameters, and at the same time, fourth information carries a receive-transport time difference between transmitting the first SL-PRS and receiving the second SL-PRS, positioning assistance information, a time stamp associated with the measurement value, positioning measurement value identification information, and the like.

Step 4, after receiving the fourth information, the second device receives the first SL-PRS according to the fourth information or the higher-layer parameters/preconfigured parameters, and at the same time, the second device uses the fourth information content to complete the measurement of the receive-transport time difference of the SL-PRS; and then performs location calculation to complete the ranging or positioning.

It should be noted that when performing the location calculation, it is necessary to ensure that measurement values of receive-transport time differences of the SL-PRSs of the two devices correspond to the same pair of the SL-PRSs or the SL-PRSs with close distance in time domain, so as not to affect the accuracy.

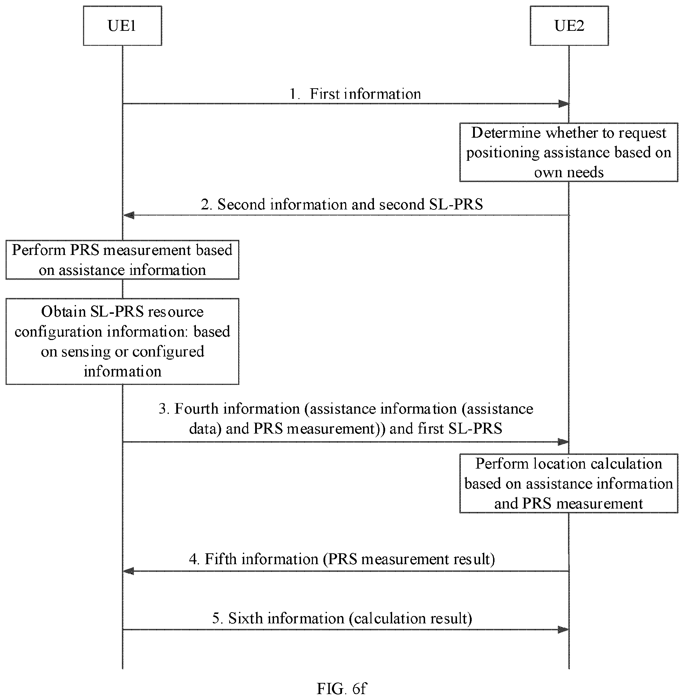

Example 4, first information includes a positioning indication signaling, that is, one or more first devices assist a second device in positioning. Referring to FIG. 6f, FIG. 6f corresponds to a case that a first device (UE1) assists a second device (UE2). As for a case that a plurality of first devices assist the second device, it can be understood by combining FIG. 6b and FIG. 6f. The specific flow is as follows.

The difference between the flow of FIG. 6f and the flow of FIG.6e is in that the location calculation is finally performed by first device. The second device transmits the PRS measurement value to the first device through the fifth information, and the first device performs the location calculation, and then transmits the result of the location calculation to the second device through the sixth information.

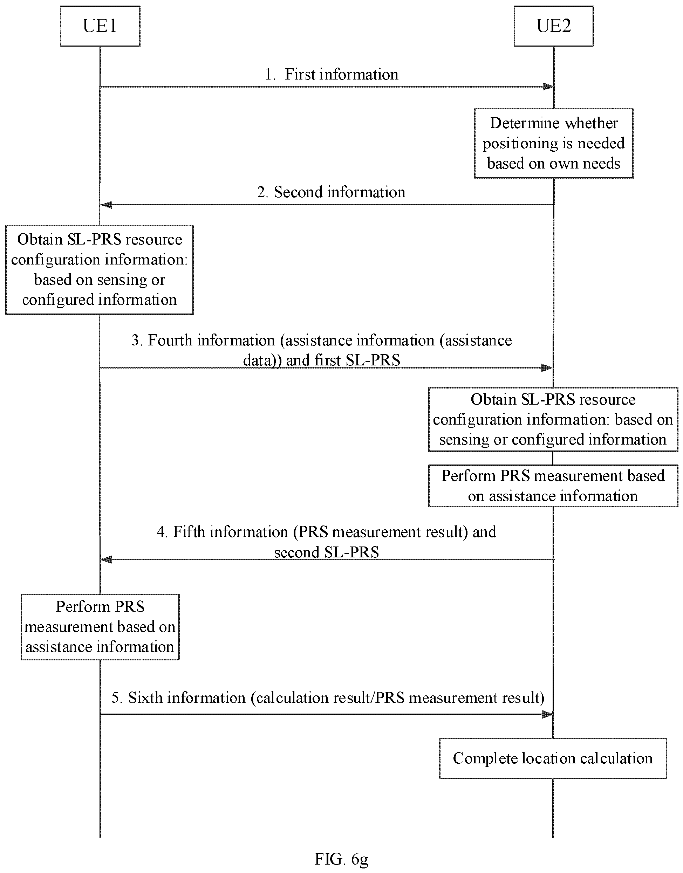

Example 5, first information includes a positioning indication signaling, that is, one or more first devices assist a second device in positioning. Referring to FIG. 6g, FIG. 6g corresponds to a case that a second device (UE2) assists a first device (UE1). As for a case that a plurality of second devices assist a first device, it can be understood by combining FIG. 6b and FIG. 6g. The specific flow is as follows.

The difference between the flow of FIG. 6g and the flow of FIG. 6e is in that the second device transmits the PRS measurement value to the first device through the fifth information, and the first device performs the location calculation, and transmits the PRS measurement value or the result of the location calculation to the second device through the sixth information.

Information contents of the sixth information appearing in the above interaction process include at least one of:
(1) at least part of the third information;
(2) a positioning measurement value;
(3) a time stamp of the positioning measurement value;
(4) quality indication of the positioning measurement value;
(5) positioning measurement value identification information; or
(6) positioning calculation result information,

The third information includes at least one of:
(1.1) signaling type information of the third information, including at least one of positioning reference signal request signaling or a positioning request flag bit;
(1.2) identification information, including at least one of destination identification information, source identification information or a session process ID;
(1.3) positioning reference signal configuration information, including at least one of positioning reference signal configuration parameters, time interval information or a time domain reference point; or
(1.4) positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

It should be noted that the sixth information is the same as the first information mentioned above, and at least part of the information contents of the sixth information can be configured by using one or more higher-layer parameters or preconfigured, that is, only a part of the above information contents can be included in the sixth information, and the rest can be configured by using one or more higher-layer parameters or preconfigured.

The above positioning measurement quantity type can include indicating the measurement quantity to be measured, for example, SL-PRS RSRP, SL-PRS receive-transport time difference of the device, RTOA, RSTD, AOA, AOD, and the like.

The above positioning assistance information can include at least one of speed, moving direction, acceleration, position coordinate information, identity ID, SL-SSB time-frequency configuration information, identity information related to the first device or the second devices, or the like.

The above positioning reference signal search assistance information includes at least one of an expected reference signal time difference (a time difference and a transmission delay difference of transmitting the positioning reference signals between the first device with other adjacent first devices) or a search window (corresponding to the uncertainty of the transmission delay difference). The positioning reference signal search assistance information can also be configured by using one or more higher-layer parameters or preconfigured.

The above positioning method or capability information is used to indicate the method used in the current positioning process, for example, Multi-RTT positioning, TDOA positioning, AOA positioning or AOD positioning.

The above positioning type information is used to distinguish whether the current positioning method is used to relative positioning, ranging and absolute positioning.

The above measurement window indication information includes starting location information of the measurement window, period information, and the like.

The above positioning calculation function indication information is used to display whether the current device supports the positioning calculation function or only reports the measurement quantity for assistance positioning.

The above measurement assistance information includes at least one of SL-PRS information (for example, SL-PRS resource set ID, SL-PRS resource ID, SL-PRS specific time-frequency resource location information, SL-PRS configuration information, sequence initialization ID, and the like) used to indicate the correlation of the target device when measuring the positioning measurement value of the device, or a reporting granularity of the positioning measurement value of the SL-PRS of the device.

The above positioning reference signal configuration parameter set includes at least one of SL-PRS resource type, power control parameter, sequence ID, SL-PRS resource ID, SL-PRS resource set ID, frequency domain comb size, frequency domain offset between symbols, cyclic shift parameter, time domain starting position, starting symbol position mapped in slot, number of occupied symbols in time domain, time domain period of the SL-PRS, number or duration of the SL-PRS periods, starting position of frequency domain, frequency domain offset value relative to frequency domain reference point, number of bandwidth or RB occupied by frequency domain, subcarrier interval of the SL-PRS, cyclic prefix type or priority information of the SL-PRS.

The above SL-PRS resource type can be used to indicate that the resource of the SL-PRS is one of periodic, aperiodic or semi-persistent.

The above relative reference point in a time-frequency domain can be a resource time-frequency position that maps the positioning request signaling or the positioning indication signaling, or a reference time-frequency position configured by using one or more higher-layer parameters or preconfigured.

The above SL-PRS configuration parameter set can indicate related configurations of the SL-PRS transmitted by the first device and/or the second devices.

Some or all of the parameters in the above SL-PRS configuration parameter set can also be configured by using one or more higher-layer parameters or preconfigured, and related parameters configured by using one or more higher-layer parameters or preconfigured do not need to appear in the first information or the third information.

The above cyclic prefix type is used to indicate whether a current CP is a normal CP or an extended CP.

The priority of the SL-PRS can also be determined based on a priority of the physical channel associated with the SL-PRS or a priority value carried in associated control signaling.

The above positioning measurement value includes at least one of RSTD, SL-PRS RSRP, a receive-transport time difference of the first device, receive-transport time differences of the second devices, SL-PRS SINR/SNR, RTOA, AOA, AOD, transmission delay of the strongest path (which can assist in removing some erroneous distance estimates), delay difference between multiple paths, or longitude/latitude/altitude.

The quality indication information of the above measurement value includes at least one of error resolution, error value (indicated in combination with error resolution), or the number of error sampling points.

The above positioning reference signal search assistance information includes at least one of an expected reference signal time difference (a time difference of transmitting the SL-PRS between the first device with other adjacent first devices and a transmission delay difference) or a search window (corresponding to the uncertainty of the transmission delay difference). The SL-PRS search assistance information can also be configured by using one or more higher-layer parameters or preconfigured.

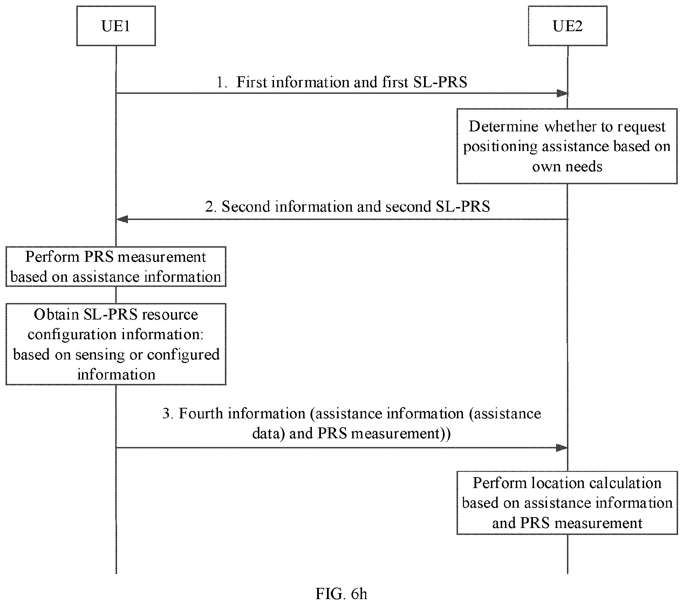

Example 6, first information includes a positioning indication signaling, that is, one or more first devices assist a second device in positioning. Referring to FIG. 6h, FIG. 6h corresponds to a case that a first device (UE1) assists a second device (UE2). As for a case that a plurality of first devices assist a second device, it can be understood by combining FIG. 6b and FIG. 6h. The specific flow is as follows.

Step 1, a first device transmits first information (the positioning indication signaling) to inform a second device that the first device itself can provide positioning functions for the second device. In addition, the first device also transmits a first SL-PRS.

The first information is the positioning indication signaling, and can include: SL-PRS indication signaling, positioning request/positioning indication flag bit, destination identification information, source identification information, SL-PRS configuration parameters, positioning assistance information, SL-PRS search assistance information, positioning method/capability information, time interval information and a time domain reference point.

Periods of SL-PRSs of a plurality of first devices can be the same or similar, and time domain positions of the SL-PRSs are relatively close or occupy the same slot.

Step 2, the second device receives the first information, receives the first SL-PRS according to the first information and higher-layer parameters or preconfigured parameters, transmits a second SL-PRS, and measures a receive-transport time difference between receiving the first SL-PRS and transmitting a second SL-PRS. If the first device supports location calculation, the second device can also report a positioning measurement quantity to the first device.

The second information can include SL-PRS indication signaling, destination identification information, source identification information, SL-PRS configuration parameters, positioning assistance information, SL-PRS search assistance information, time interval information, a time domain reference point, a positioning measurement value, a time stamp associated with measurement value (including a system frame number and a slot number for indicating an effective time of this measurement), quality indication of measurement value, positioning measurement value identification information, and the like.

Step 3, the first device receives the second information, receives the second SL-PRS according to the second information and the higher-layer parameters or the preconfigured parameters, and measures a receive-transport time difference between transmitting the first SL-PRS and receiving the second SL-PRS. If the first device supports the location calculation and receives the measurement quantity reported by the second device, the first device replaces the second device for location calculation and feeds back the result of location calculation to the second device; otherwise, the first device only feeds back the positioning measurement quantity to the second device through fourth information.

The fourth information at least includes positioning assistance information, positioning measurement value, a time stamp associated with measurement value (including a system frame number and a slot number for indicating an effective time of this measurement), quality indication of measurement value, positioning measurement value identification information, and the like.

Step 4, the second device receives the fourth information to complete the positioning process.

It should be noted that when performing the location calculation, it is necessary to ensure that measurement values of receive-transport time differences of the SL-PRSs of the two devices correspond to the same pair of the SL-PRSs or the SL-PRSs with close distance in time domain, so as not to affect the accuracy.

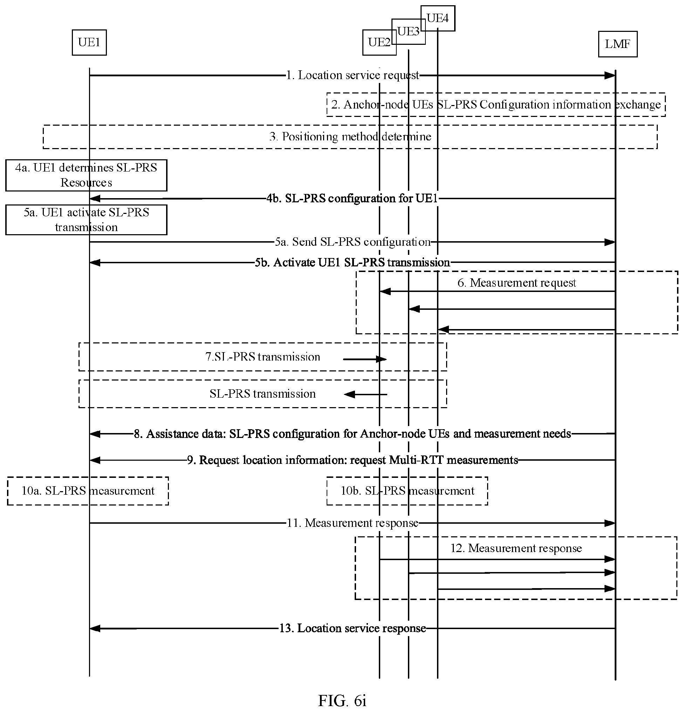

Example 6, referring to FIG. 6i, when there is LMF in SL-Positioning, the specific flow of positioning is as follows.

This scenario is mainly suitable for absolute positioning, for example, an anchor node is an RSU, SL-PRS transmission parameters of each anchor node RSU are periodically and continuously transmitted, and resources occupied by the SL-PRSs of respective anchor nodes are orthogonal. However, it is not limited that the SL-PRS configuration parameters of the anchor node RSU are preconfigured, but also the SL-PRS transmission configuration determined by LMF configuration or SL-PRS dedicated resource selection process. If the above method is used, corresponding SL-PRS configuration parameters need to be notified to the first device.
(1) A first device requests a location service (first information) from LMF.
(2) Information required by one or more second devices (the anchor node RSU) for interactive positioning with the LMF, for example, positioning assistance information, SL-PRS configuration parameter set, and the like.
   There needs to be an interactive process between the first device with the second devices for determining the anchor node.
(3) LMF determines positioning methods (TDOA, AOA/AOD, RTT, and the like) used in this positioning process based on positioning method/capability information that the first device and the second devices can support, and determines contents such as assistance information, positioning measurement quantity type information and positioning type information required by corresponding methods.
(4) At this time, the first device can transmit a SL-PRS, since there is no base station scheduling, the resource configuration of the SL-PRS is
   a. determined by the first device itself, for example, the first device can select SL-PRS resources based on sensing results and SL-PRS configuration parameter information; and
   b. LMF determines SL-PRS resource configuration information of the first device, similar to LMF scheduling (transmitting SL-PRS configuration parameters to the first device).
(5) The first device can
   a. determine an activation time of the SL-PRS by itself, and then inform the LMF of configuration information and activation time; and
   b. the LMF activates the transmission of the SL-PRS.
(6) The LMF informs the second devices to measure the SL-PRS, and informs the second devices the configuration information of the SL-PRS and related measurement information transmitted by the first device.
   Alternatively, the second devices do not need to be informed of the specific configuration information of the SL-PRS, and the transmitting and receiving of the SL-PRS is similar to a resource allocation process in a R16 stage.
(7) The first device and the second devices can periodically, aperiodically or semi-persistently transmit the SL-PRS.
(8) The LMF provides assistance data to the first device, for example, transmitting the SL-PRS configuration information related to the second device to the first device, and informing the first device of all relevant information (positioning measurement quantity type information, and the like) required for measuring the SL-PRS.
(9) The LMF requests the first device to perform RTT measurement, including SL-PRS configuration information used to measure a transmitting time of the SL-PRS and a receiving time of the SL-PRS, a reporting granularity of a receive-transport time difference of the SL-PRS of the devices, and the like.
   Note that steps (6/7/9) do not necessarily have a chronological order, especially when the SL-PRS is transmitted periodically.
(10) The first device and the second devices measure the received SL-PRS according to the received information, for example, receive-transport time difference of the SL-PRS, RSRP, SNR/SINR, and the like.
(11) The first device reports a measurement result back to the LMF, for example, contents of the second information or the fourth information.
(12) The second devices report measurement results back to the LMF, for example, contents of the second information or the fourth information.
(13) The LMF performs location calculation by combining the measurement results of the first device and the second devices and positioning assistance information, and feeds back the positioning results to the first device to complete the positioning process.

The positioning method for the sidelink provided in the embodiments of the present disclosure can be performed by a positioning apparatus for a sidelink. In the embodiments of the present disclosure, the positioning apparatus for the sidelink provided in the embodiments of the present disclosure is described by using the positioning apparatus for the sidelink performing the positioning method for the sidelink as an example.

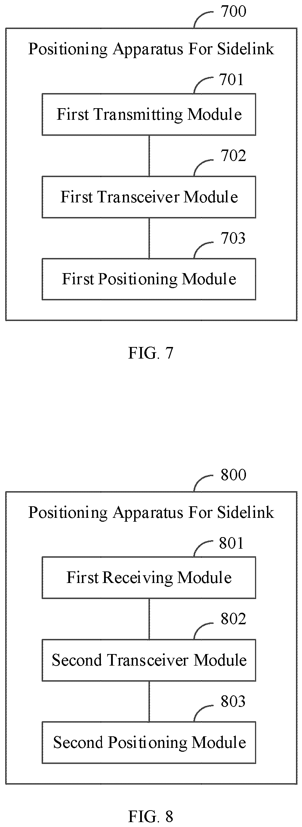

Referring to FIG. 7, an embodiment of the present disclosure provides a positioning apparatus 700 for a sidelink, including:
a first transmitting module 701 configured to transmit, by a first device, first information to one or more second devices, where the first information includes a positioning request signaling;
a first transceiver module 702 configured to transmit, by the first device, a first positioning reference signal to the second devices, and receive, by the first device, second positioning reference signals from the second devices; and
a first positioning module 703 configured to obtain, by the first device, a positioning calculation result of the first device according to a measurement result of the first positioning reference signal and measurement results of the second positioning reference signals, or receive, by the first device, the positioning calculation result of the first device from one of the second devices.

Optionally, the first information includes at least one of:
signaling type information of the first information, including at least one of positioning reference signal request signaling or a positioning request flag bit;
identification information, including at least one of destination identification information, source identification information or a session process ID;
positioning reference signal configuration information, including at least one of positioning reference signal configuration parameters, time interval information or a time domain reference point; or
positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

Optionally, the first transceiver module is configured to:
transmit, by the first device, the first positioning reference signal to the second devices; and
receive, by the first device, second information and the second positioning reference signals from the second devices, where the second information is feedback information of the first information;
the first positioning module is configured to:
   perform, by the first device, positioning measurement according to the second information and/or target positioning reference signals to obtain a first positioning measurement value, where the target positioning reference signals include the first positioning reference signal and the second positioning reference signals;
   receive, by the first device, second positioning measurement values measured by the second devices from the second devices through the second information; and
   obtain, by the first device, the positioning calculation result of the first device according to the second information and/or target positioning measurement values, where the target positioning measurement values include the first positioning measurement value and the second positioning measurement values.

Optionally, the first transceiver module is configured to:
receive, by the first device, second information and the second positioning reference signals from the second devices, where the second information is feedback information of the first information;
transmit, by the first device, fourth information and the first positioning reference signal to the second devices, where the fourth information is feedback information of the second information; and
receive, by the first device, fifth information from the second devices, where the fifth information is feedback information of the fourth information;
the first positioning module is configured to:
   perform, by the first device, positioning measurement according to the second information and/or target positioning reference signals to obtain a first positioning measurement value;
   receive, by the first device, second positioning measurement values measured by the second devices from the second devices through the fifth information, where the target positioning reference signals include the first positioning reference signal and the second positioning reference signals; and
   obtain, by the first device, the positioning calculation result of the first device according to first target information and/or target positioning measurement values, where the first target information is the second information or the fifth information, and the target positioning measurement values include the first positioning measurement value and the second positioning measurement values;
   the first positioning module is configured to:
      perform, by the first device, positioning measurement according to the second information and/or target positioning reference signals to obtain a first positioning measurement value;
      transmit, by the first device, the first positioning measurement value to the second devices through the fourth information; and
      receive, by the first device, the positioning calculation result of the first device from one of the second devices through the fifth information, where the positioning calculation result of the first device is obtained by the second devices according to the fourth information and/or target positioning measurement values, where the target positioning measurement values include the first positioning measurement value and the second positioning measurement values.

Optionally, information contents of the second information, the fourth information and the fifth information include at least one of:
at least part of the third information;
a positioning measurement value;
a time stamp of the positioning measurement value;
quality indication of the positioning measurement value;
positioning measurement value identification information; or
positioning calculation result information,
where the third information includes at least one of:
signaling type information of the third information, including at least one of positioning reference signal request signaling or a positioning request flag bit;
identification information, including at least one of destination identification information, source identification information or a session process ID;
positioning reference signal configuration information, including at least one of positioning reference signal configuration parameters, time interval information or a time domain reference point; or
positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

Optionally, in the case that the time interval information is carried in target information, or the time interval information is configured by using one or more higher-layer parameters or preconfigured, the time interval information satisfies at least one of:
when a transmission of a positioning reference signal is activated or scheduled by the target information, the time interval information is a time interval between a time domain starting transmission position of the positioning reference signal and a target time domain reference point, where the target time domain reference point is a slot position where the target information is transmitted, or a time domain reference point in the target information, or a time domain reference point configured by using one or more higher-layer parameters, or a preconfigured time domain reference point; or
in the case that the target information supports retransmission, retransmitted target information does not carry the time interval information,
where the target information is at least one of the first information, second information, fourth information or fifth information.

Optionally, the apparatus further includes a first processing module, where in the case that the feedback latency bound information is carried in target information, or the feedback latency bound information is configured by using one or more higher-layer parameters or preconfigured, the first processing module is configured to at least one of:
receive, by the first device, feedback information corresponding to the target information from the second devices within the feedback latency bound information; or
complete, by the first device, an overall positioning process within the feedback latency bound information,
where the target information is at least one of the first information, the second information, the fourth information or the fifth information;
the feedback latency bound information satisfies at least one of:
   the feedback latency bound information is an upper limit of a feedback time of the target information;
   a target time domain reference point of the feedback latency bound information is a time domain reference point configured by using one or more higher-layer parameters or preconfigured, or carried in the target information; or
   in the case that the target information supports retransmission, retransmitted target information does not carry the feedback latency bound information.

Optionally, the apparatus further includes a second processing module configured to at least one of:
carry, by the first device, the positioning measurement value identification information in the fourth information, where the positioning measurement value identification information is used to indicate the first positioning reference signal and the second positioning reference signals associated with the first positioning measurement value;
preset time parameters when the first device transmits the first positioning reference signal and time parameters when the second devices transmit the second positioning reference signals, where the time parameters include at least one of a positioning reference signal transmission period, an offset value in the period or a period reference point;
ensure that the first device and the second devices measure the first positioning reference signal and the second positioning reference signals in a same measurement window according to an indication of the measurement window indication information; or
carry, by the first device, device identity information of the first device in the fourth information,
where the positioning measurement value identification information includes at least one of:
   related information of measuring the positioning reference signals, including at least part of the positioning reference signal configuration information;
   a time stamp of the first positioning reference signal and/or time stamps of the second positioning reference signals associated with the positioning measurement value; or
   positioning measurement value ID.

Optionally, the first transmitting module is configured to:
transmit, by the first device, the first information to the second devices through a third device;
the first transceiver module is configured to:
   transmit, by the first device, the measurement result of the first positioning reference signal and the measurement results of the second positioning reference signals to the third device, and receive the positioning calculation result of the first device from the third device.

Referring to FIG. 8, an embodiment of the present disclosure provides a positioning apparatus 800 for a sidelink, including:
a first receiving module 801 configured to receive, by a second device, first information from one or more first devices, where the first information includes a positioning request signaling;
a second transceiver module 802 configured to receive, by the second device, first positioning reference signals from the first devices, and transmit, by the second device, a second positioning reference signal to the first devices; and
a second positioning module 803 configured to transmit, by the second device, measurement results of the first positioning reference signals and a measurement result of the second positioning reference signal to the first devices, or obtain, by the second device, positioning calculation results of the first devices according to the measurement results of the first positioning reference signals and the measurement result of the second positioning reference signal, and transmit the positioning calculation results of the first devices to the first devices.

Optionally, the first information includes at least one of:
signaling type information of the first information, including at least one of positioning reference signal request signaling or a positioning request flag bit;
identification information, including at least one of destination identification information, source identification information or a session process ID;
positioning reference signal configuration information, including at least one of positioning reference signal configuration parameters, time interval information or a time domain reference point; or
positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

Optionally, the second transceiver module is configured to:
receive, by the second device, the first positioning reference signals from the first devices; and
transmit, by the second device, second information and the second positioning reference signal to the first devices, where the second information is feedback information of the first information;
the second positioning module is configured to:
   perform, by the second device, positioning measurement according to the first information and/or target positioning reference signals to obtain a second positioning measurement value, where the target positioning reference signals include the first positioning reference signals and the second positioning reference signals; and
   transmit, by the second device, the second positioning measurement value to the first devices through the second information.

Optionally, the second transceiver module is configured to:
transmit, by the second device, second information and the second positioning reference signal to the first devices, where the second information is feedback information of the first information;
receive, by the second device, fourth information and the first positioning reference signals from the first devices, where the fourth information is feedback information of the second information; and
transmit, by the second device, fifth information to the first devices, where the fifth information is feedback information of the fourth information;
the second positioning module is configured to:
   perform, by the second device, positioning measurement according to the fourth information and/or target positioning reference signals to obtain a second positioning measurement value, where the target positioning reference signals include the first positioning reference signals and the second positioning reference signal; and
   transmit, by the second device, the second positioning measurement value to the first devices through the fifth information;
   the second positioning module is configured to:
      perform, by the second device, positioning measurement according to the fourth information and/or target positioning reference signals to obtain a second positioning measurement value, where the target positioning reference signals include the first positioning reference signals and the second positioning reference signal;
      receive, by the second device, first positioning measurement values measured by the first devices from the first devices through the fourth information;
      obtain, by the second device, the positioning calculation results of the first devices according to the fourth information and/or target positioning measurement values, where the target positioning measurement values include the first positioning measurement values and the second positioning measurement value; and
      transmit, by the second device, the positioning calculation results of the first devices to the first devices through the fifth information.

Optionally, information contents of the second information, the fourth information and the fifth information include at least one of:
at least part of the third information;
a positioning measurement value;
a time stamp of the positioning measurement value;
quality indication of the positioning measurement value;
positioning measurement value identification information; or
positioning calculation result information,
where the third information includes at least one of:
   signaling type information of the third information, including at least one of positioning reference signal request signaling or a positioning request flag bit;
   identification information, including at least one of destination identification information, source identification information or a session process ID;
   positioning reference signal configuration information, including at least one of positioning reference signal configuration parameters, time interval information or a time domain reference point; or
   positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

Optionally, in the case that the time interval information is carried in target information, or the time interval information is configured by using one or more higher-layer parameters or preconfigured, the time interval information satisfies at least one of:
when a transmission of a positioning reference signal is activated or scheduled by the target information, the time interval information is a time interval between a time domain starting transmission position of the positioning reference signal and a target time domain reference point, where the target time domain reference point is a slot position where the target information is transmitted, or a time domain reference point in the target information, or a time domain reference point configured by using one or more higher-layer parameters, or a preconfigured time domain reference point; or
in the case that the target information supports retransmission, retransmitted target information does not carry the time interval information,
where the target information is at least one of the first information, second information, fourth information or fifth information.

Optionally, the apparatus further includes a third processing module, where in the case that the feedback latency bound information is carried in target information, or the feedback latency bound information is configured by using one or more higher-layer parameters or preconfigured, the third processing module is configured to at least one of:
receive, by the first devices, feedback information corresponding to the target information from the second device within the feedback latency bound information; or
complete, by the second device, an overall positioning process within the feedback latency bound information,
where the target information is at least one of the first information, the second information, the fourth information or the fifth information;
the feedback latency bound information satisfies at least one of:
   the feedback latency bound information is an upper limit of a feedback time of the target information;
   a target time domain reference point of the feedback latency bound information is a time domain reference point configured by using one or more higher-layer parameters or preconfigured, or carried in the target information; or
   in the case that the target information supports retransmission, retransmitted target information does not carry the feedback latency bound information.

Optionally, the apparatus further includes a fourth processing module configured to at least one of:
carry, by the second device, the positioning measurement value identification information in the second information and/or the fifth information, where the positioning measurement value identification information is used to indicate the first positioning reference signals and the second positioning reference signal associated with the second positioning measurement value;
preset time parameters when the first devices transmits the first positioning reference signals and time parameters when the second device transmit the second positioning reference signal, where the time parameters include at least one of a positioning reference signal transmission period, an offset value in the period or a period reference point;
ensure that the first devices and the second device measure the first positioning reference signals and the second positioning reference signal in a same measurement window according to an indication of the measurement window indication information; or
carry, by the second device, device identity information of the second device in the second information and/or the fifth information,
where the positioning measurement value identification information includes at least one of:
   related information of measuring the positioning reference signals, including at least part of the positioning reference signal configuration information;
   time stamps of the first positioning reference signals and/or a time stamp of the second positioning reference signal associated with the positioning measurement value; or
   positioning measurement value ID.

Optionally, the first receiving module is configured to:
receive, by the second device, the first information from the second devices through a third device;
the second transceiver module is configured to:
   transmit, by the second device, the measurement results of the first positioning reference signals and the measurement result of the second positioning reference signal to the third device, obtain, by the third device, the positioning calculation results of the first devices, and transmit, by the third device, the positioning calculation results of the first devices to the first devices.

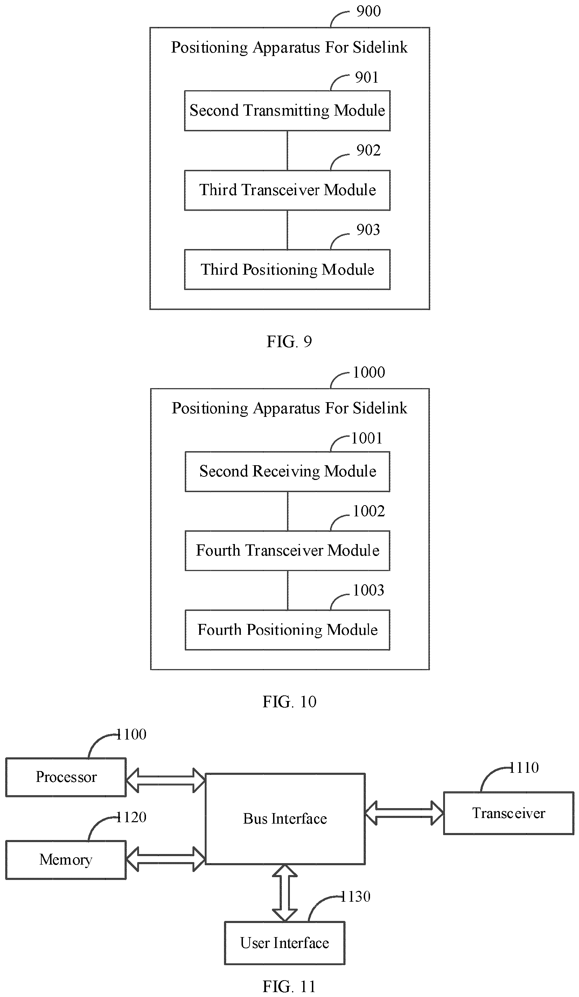

Referring to FIG. 9, an embodiment of the present disclosure provides a positioning apparatus 900 for a sidelink, including:
a second transmitting module 901 configured to transmit, by a first device, first information to one or more second devices, where the first information includes a positioning indication signaling;
a third transceiver module 902 configured to transmit, by the first device, a first positioning reference signal to the second devices, and receive, by the first device, second positioning reference signals from the second devices; and
a third positioning module 903 configured to transmit, by the first device, a measurement result of the first positioning reference signal and measurement results of the second positioning reference signals to the second devices, or obtain, by the first device, positioning calculation results of the second devices according to the measurement result of the first positioning reference signal and the measurement results of the second positioning reference signals, and transmit the positioning calculation results of the second devices to the second devices.

Optionally, the first information includes at least one of:
signaling type information of the first information, including at least one of positioning reference signal indication signaling or a positioning indication flag bit;
identification information, including at least one of destination identification information, source identification information or a session process ID;
positioning reference signal configuration information, including at least one of positioning reference signal configuration parameters, time interval information or a time domain reference point; or
positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

Optionally, the third transceiver module is configured to:
receive, by the first device, second information and the second positioning reference signals from the second devices, where the second information is feedback information of the first information; and
transmit, by the first device, fourth information and the first positioning reference signal to the second devices, where the fourth information is feedback information of the second information;
the third positioning module is configured to:
   perform, by the first device, positioning measurement according to the second information and/or target positioning reference signals to obtain a first positioning measurement value, where the target positioning reference signals include the first positioning reference signal and the second positioning reference signals; and
   transmit, by the first device, the first positioning measurement value to the second devices through the fourth information.

Optionally, the third transceiver module is configured to:
transmit, by the first device, the first positioning reference signal to the second devices;
receive, by the first device, second information and the second positioning reference signals from the second devices, where the second information is feedback information of the first information; and
transmit, by the first device, fourth information to the second devices, where the fourth information is feedback information of the second information;
the third positioning module is configured to:
   perform, by the first device, positioning measurement according to the second information and/or target positioning reference signals to obtain a first positioning measurement value, where the target positioning reference signals include the first positioning reference signal and the second positioning reference signals; and
   transmit, by the first device, the first positioning measurement value to the second devices through the fourth information;
   the third positioning module is configured to:
      perform, by the first device, positioning measurement according to the second information and/or target positioning reference signals to obtain a first positioning measurement value, where the target positioning reference signals include the first positioning reference signal and the second positioning reference signals;
      receive, by the first device, second positioning measurement values measured by the second devices from the second devices through the second information;
      obtain, by the first device, the positioning calculation results of the second devices according to the second information and/or target positioning measurement values, where the target positioning measurement values include the first positioning measurement value and the second positioning measurement values; and
      transmit, by the first device, the positioning calculation results of the second devices to the second devices through the fourth information.

Optionally, information contents of the second information and the fourth information include at least one of:
at least part of the third information;
a positioning measurement value;
a time stamp of the positioning measurement value;
quality indication of the positioning measurement value;
positioning measurement value identification information; or
positioning calculation result information,
where the third information includes at least one of:
   signaling type information of the third information, including at least one of positioning reference signal indication signaling or a positioning indication flag bit;
   identification information, including at least one of destination identification information, source identification information or a session process ID;
   positioning reference signal configuration information, including at least one of positioning reference signal configuration parameters, time interval information or a time domain reference point; or
   positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

Optionally, in the case that the time interval information is carried in target information, or the time interval information is configured by using one or more higher-layer parameters or preconfigured, the time interval information satisfies at least one of:
when a transmission of a positioning reference signal is activated or scheduled by the target information, the time interval information is a time interval between a time domain starting transmission position of the positioning reference signal and a target time domain reference point, where the target time domain reference point is a slot position where the target information is transmitted, or a time domain reference point in the target information, or a time domain reference point configured by using one or more higher-layer parameters, or a preconfigured time domain reference point; or
in the case that the target information supports retransmission, retransmitted target information does not carry the time interval information,
where the target information is at least one of the first information, second information, fourth information or fifth information.

Optionally, the apparatus further includes a fifth processing module, in the case that the feedback latency bound information is carried in target information, or the feedback latency bound information is configured by using one or more higher-layer parameters or preconfigured, the fifth processing module is configured to at least one of:
transmit, by the second devices, feedback information corresponding to the target information the first device within the feedback latency bound information; or
complete, by the second devices, an overall positioning process within the feedback latency bound information,
where the target information is at least one of the first information, the second information, the fourth information or fifth information;
the feedback latency bound information satisfies at least one of:
   the feedback latency bound information is an upper limit of a feedback time of the target information;
   a target time domain reference point of the feedback latency bound information is a time domain reference point configured by using one or more higher-layer parameters or preconfigured, or carried in the target information; or
   in the case that the target information supports retransmission, retransmitted target information does not carry the feedback latency bound information.

Optionally, the apparatus further includes a sixth processing module configured to at least one of:
carry, by the first device, the positioning measurement value identification information in the fourth information, where the positioning measurement value identification information is used to indicate the first positioning reference signal and the second positioning reference signals associated with the first positioning measurement value;
preset time parameters when the first device transmits the first positioning reference signal and time parameters when the second devices transmit the second positioning reference signals, where the time parameters include at least one of a positioning reference signal transmission period, an offset value in the period or a period reference point;
ensure that the first device and the second devices measure the first positioning reference signal and the second positioning reference signals in a same measurement window according to an indication of the measurement window indication information; or
carry, by the first device, device identity information of the first device in the fourth information,
where the positioning measurement value identification information includes at least one of:
   related information of measuring the positioning reference signals, including at least part of the positioning reference signal configuration information;
   a time stamp of the first positioning reference signal and/or time stamps of the second positioning reference signals associated with the positioning measurement value; or
   positioning measurement value ID.

Optionally, the second transmitting module is configured to:
transmit, by the first device, the first information to the second devices through a third device;
the third transceiver module is configured to:
   transmit, by the first device, the measurement result of the first positioning reference signal and the measurement results of the second positioning reference signals to the third device, obtain, by the third device, the positioning calculation results of the second devices, and transmit, by the third device, the positioning calculation results of the second devices to the second devices.

Referring to Fig. 10, an embodiment of the present disclosure provides a positioning apparatus 1000 for a sidelink, including:
a second receiving module 1001 configured to receive, by a second device, first information from one or more first devices, where the first information includes a positioning indication signaling;
a fourth transceiver module 1002 configured to receive, by the second device, first positioning reference signals from the first devices, and transmit, by the second device, a second positioning reference signal to the first devices; and
a fourth positioning module 1003 configured to obtain, by the second device, a positioning calculation result of the second device according to measurement results of the first positioning reference signals and a measurement result of the second positioning reference signal, or receive, by the second device, the positioning calculation result of the second device from one of the first devices.

Optionally, the first information includes at least one of:
signaling type information of the first information, including at least one of positioning reference signal indication signaling or a positioning indication flag bit;
identification information, including at least one of destination identification information, source identification information or a session process ID;
positioning reference signal configuration information, including at least one of positioning reference signal configuration parameters, time interval information or a time domain reference point; or
positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

Optionally, the fourth transceiver module is configured to:
transmit, by the second device, second information and the second positioning reference signal to the first devices, where the second information is feedback information of the first information; and
receive, by the second device, fourth information and the first positioning reference signals from the first devices, where the fourth information is feedback information of the second information;
the fourth positioning module is configured to:
   perform, by the second device, positioning measurement according to the fourth information and/or target positioning reference signals to obtain a second positioning measurement value, where the target positioning reference signals include the first positioning reference signals and the second positioning reference signal;
   receive, by the second device, first positioning measurement values measured by the first devices from the first devices through the fourth information; and
   obtain, by the second device, positioning calculation results of the first devices according to second target information and/or target positioning measurement values, where the second target information is the first information or the fourth information, and the target positioning measurement values include the first positioning measurement values and the second positioning measurement value.

Optionally, the fourth transceiver module is configured to:
receive, by the second device, the first positioning reference signals from the first devices;
transmit, by the second device, second information and the second positioning reference signal to the first devices, where the second information is feedback information of the first information; and
receive, by the second device, fourth information from the first devices, where the fourth information is feedback information of the second information;
the fourth positioning module is configured to:
   perform, by the second device, positioning measurement according to the first information and/or target positioning reference signals to obtain a second positioning measurement value, where the target positioning reference signals include the first positioning reference signals and the second positioning reference signal;
   receive, by the second device, first positioning measurement values measured by the first devices from the first devices through the fourth information; and
   obtain, by the second device, the positioning calculation result of the second device according to second target information and/or target positioning measurement values, where the second target information is the first information or the fourth information, and the target positioning measurement values include the first positioning measurement values and the second positioning measurement value;
   the fourth positioning module is configured to:
      perform, by the second device, positioning measurement according to the first information and/or target positioning reference signals to obtain a second positioning measurement value, where the target positioning reference signals include the first positioning reference signals and the second positioning reference signal;
      transmit, by the second device, the second positioning measurement value to the first devices through the second information; and
      receive, by the second device, the positioning calculation result of the second device from one of the first devices through the fourth information, where the positioning calculation result of the second device is obtained by the first devices according to the second information and/or target positioning measurement values, where the target positioning measurement values include the first positioning measurement values and the second positioning measurement value.

Optionally, information contents of the second information and the fourth information include at least one of:
at least part of the third information;
a positioning measurement value;
a time stamp of the positioning measurement value;
quality indication of the positioning measurement value;
positioning measurement value identification information; or
positioning calculation result information,
where the third information includes at least one of:
   signaling type information of the third information, including at least one of positioning reference signal indication signaling or a positioning indication flag bit;
   identification information, including at least one of destination identification information, source identification information or a session process ID;
   positioning reference signal configuration information, including at least one of positioning reference signal configuration parameters, time interval information or a time domain reference point; or
   positioning measurement configuration information, including at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

Optionally, in the case that the time interval information is carried in target information, or the time interval information is configured by using one or more higher-layer parameters or preconfigured, the time interval information satisfies at least one of:
when a transmission of a positioning reference signal is activated or scheduled by the target information, the time interval information is a time interval between a time domain starting transmission position of the positioning reference signal and a target time domain reference point, where the target time domain reference point is a slot position where the target information is transmitted, or a time domain reference point in the target information, or a time domain reference point configured by using one or more higher-layer parameters, or a preconfigured time domain reference point; or
in the case that the target information supports retransmission, retransmitted target information does not carry the time interval information,
where the target information is at least one of the first information, second information, fourth information or fifth information.

Optionally, the apparatus further includes a seventh processing module, in the case that the feedback latency bound information is carried in target information, or the feedback latency bound information is configured by using one or more higher-layer parameters or preconfigured, the seventh processing module is configured to at least one of:
transmit, by the second devices, feedback information corresponding to the target information the first device within the feedback latency bound information; or
complete, by the second devices, an overall positioning process within the feedback latency bound information,
where the target information is at least one of the first information, the second information, the fourth information or fifth information;
the feedback latency bound information satisfies at least one of:
   the feedback latency bound information is an upper limit of a feedback time of the target information;
   a target time domain reference point of the feedback latency bound information is a time domain reference point configured by using one or more higher-layer parameters or preconfigured, or carried in the target information; or
   in the case that the target information supports retransmission, retransmitted target information does not carry the feedback latency bound information.

Optionally, the apparatus further includes an eighth processing module configured to at least one of:
carry, by the second device, the positioning measurement value identification information in the second information and/or the fifth information, where the positioning measurement value identification information is used to indicate the first positioning reference signals and the second positioning reference signal associated with the second positioning measurement value;
preset time parameters when the first devices transmits the first positioning reference signals and time parameters when the second device transmit the second positioning reference signal, where the time parameters include at least one of a positioning reference signal transmission period, an offset value in the period or a period reference point;
ensure that the first devices and the second device measure the first positioning reference signals and the second positioning reference signal in a same measurement window according to an indication of the measurement window indication information; or
carry, by the second device, device identity information of the second device in the second information and/or the fifth information,
where the positioning measurement value identification information includes at least one of:
   related information of measuring the positioning reference signals, including at least part of the positioning reference signal configuration information;
   time stamps of the first positioning reference signals and/or a time stamp of the second positioning reference signal associated with the positioning measurement value; or
   positioning measurement value ID.

Optionally, the second receiving module is configured to:
receive, by the second device, the first information from the second devices through a third device;
the fourth transceiver module is configured to:
   transmit, by the second device, the measurement results of the first positioning reference signals and the measurement result of the second positioning reference signal to the third device, and receive the positioning calculation result of the second device from the third device.

The positioning apparatus for the sidelink in embodiments of the present disclosure can be an electronic device, for example, an electronic device having an operating system, or a component in the electronic device, for example, an integrated circuit or a chip. The electronic device can be user equipment or other devices except the user equipment. For example, the user equipment can include but not limited to a type of the user equipment 11 listed above, other devices can be servers, a network attached storage (NAS), and the like, and the embodiments of the present disclosure are not specifically limited.

The positioning apparatus for the sidelink provided in the embodiments of the present disclosure can realize each process implemented by the method embodiments of FIG. 2 to FIG. 6i and achieve the same technical effects. To avoid repetition, details are not described herein again.

Referring to FIG. 11, an embodiment of the present disclosure provides a positioning apparatus for a sidelink, including:
a transceiver 1110 configured to receive and transmit data under a control of a processor 1100.

In FIG. 11, bus architecture can include any number of interconnected buses and bridges, specifically one or more processors represented by the processor 1100 and various circuits of memory represented by a memory 1120 are linked together. The bus architecture can also link together various other circuits such as peripherals, voltage regulators, and power management circuits, and the like, which are well known in the art and therefore will not be further described herein. A bus interface provides an interface. The transceiver 1110 can be a plurality of elements, including a transmitter and a receiver, providing means for communicating with various other devices over transmission medium, including wireless channels, wired channels, fiber optic cables, and the like. For different user equipment, a user interface 1130 can also be an interface capable of connecting externally and internally to required equipment, and the connected equipment includes but not limited to a keypad, a display, a speaker, a microphone, a joystick, and the like.

The processor 1100 is responsible for managing the bus architecture and general processing, and the memory 1120 can store data used by the processor 1100 when performing operations.

Optionally, the processor 1100 can be a central processing unit (CPU), application specific integrated circuit (ASIC), field-programmable gate array (FPGA) or complex programmable logic device (CPLD), the processor can also adopt a multi-core architecture.

The processor is used to execute any one of the methods provided by the embodiments of the present disclosure according to the obtained executable instructions by calling computer programs stored in the memory. The processor and the memory can also be physically separated.

When used as the first device, the apparatus shown in FIG. 11 can perform the method steps related to the first device as shown in FIG. 2 to FIG. 6i.

The processor is configured to read the computer programs in the memory and perform operations of:
transmitting, by a first device, first information to one or more second devices, where the first information includes a positioning request signaling;
transmitting, by the first device, a first positioning reference signal to the second devices, and receiving, by the first device, second positioning reference signals from the second devices; and
obtaining, by the first device, a positioning calculation result of the first device according to a measurement result of the first positioning reference signal and measurement results of the second positioning reference signals, or receiving, by the first device, the positioning calculation result of the first device from one of the second devices.

Alternatively, the processor is configured to read the computer programs in the memory and perform operations of:
transmitting, by a first device, first information to one or more second devices, where the first information includes a positioning indication signaling;
transmitting, by the first device, a first positioning reference signal to the second devices, and receiving, by the first device, second positioning reference signals from the second devices; and
transmitting, by the first device, a measurement result of the first positioning reference signal and measurement results of the second positioning reference signals to the second devices, or obtaining, by the first device, positioning calculation results of the second devices according to the measurement result of the first positioning reference signal and the measurement results of the second positioning reference signals, and transmitting the positioning calculation results of the second devices to the second devices.

When used as the second device, the apparatus shown in FIG. 11 can perform the method steps related to the second device as shown in FIG. 2 to FIG. 6i. For details, refer to the relevant description of the above methods, which will not be repeated here.

The processor is configured to read the computer programs in the memory and perform operations of:
receiving, by a second device, first information from one or more first devices, where the first information includes a positioning request signaling;
receiving, by the second device, first positioning reference signals from the first devices, and transmitting, by the second device, a second positioning reference signal to the first devices; and
transmitting, by the second device, measurement results of the first positioning reference signals and a measurement result of the second positioning reference signal to the first devices, or obtaining, by the second device, positioning calculation results of the first devices according to the measurement results of the first positioning reference signals and the measurement result of the second positioning reference signal, and transmitting the positioning calculation results of the first devices to the first devices.

Alternatively, the processor is configured to read the computer programs in the memory and perform operations of:
receiving, by a second device, first information from one or more first devices, wherein the first information includes a positioning indication signaling;
receiving, by the second device, first positioning reference signals from the first devices, and transmitting, by the second device, a second positioning reference signal to the first devices; and
obtaining, by the second device, a positioning calculation result of the second device according to measurement results of the first positioning reference signals and a measurement result of the second positioning reference signal, or receiving, by the second device, the positioning calculation result of the second device from one of the first devices.

An embodiment of the present disclosure further provides a readable storage medium. The readable storage medium stores a program or an instruction. When the program or the instruction is executed by a processor, each process of the foregoing embodiments of the positioning method for the sidelink can be implemented, and the same technical effects can be achieved. To avoid repetition, details are not described herein again.

The processor is a processor in the user equipment in the foregoing embodiments. The readable storage medium includes a computer readable storage medium, for example, a computer read-only memory (ROM), a random access memory (RAM), a magnetic disk, an optical disc, and the like.

An embodiment of the present disclosure further provides a chip. The chip includes a processor and a communication interface. The communication interface is coupled to the processor. The processor is configured to run a program or an instruction to implement each process of the foregoing embodiments of the positioning method for the sidelink, and the same technical effects can be achieved. To avoid repetition, details are not described herein again. It should be understood that the chip mentioned in the embodiment of the present disclosure can also be referred to as a system-level chip, a system chip, a chip system, or an on-chip system chip.

An embodiment of the present disclosure further provides a computer program/program product. The computer program/program product is stored in a storage medium, and the computer program/program product is executed by at least one processor to implement each process of the foregoing embodiments of the positioning method for the sidelink, and the same technical effects can be achieved. To avoid repetition, details are not described herein again.

It should be noted that the division of the above respective modules is only a division of logical functions, and in actual implementation, all or part of them can be integrated into a physical entity, or can be physically separated. And these modules can all be implemented in the form of software calling through processing elements; or can also all be implemented in hardware; some modules can also be implemented in the form of calling software through processing elements, and some modules can be implemented in hardware. For example, the determining module can be a separately provided processing element, or can be implemented by integrating into a certain chip of the above apparatus, in addition, it can also be stored in the memory of the above apparatus in the form of program code, and a certain processing element of the above apparatus can call and execute the function of the above determining module. The implementation of other modules is similar to this. In addition, all or part of these modules can be integrated together, and can also be implemented independently. The processing element described here can be an integrated circuit with signal processing capability. In the implementation process, each step of the above methods or each of the above modules can be completed by an integrated logic circuit of hardware in the processor element or an instruction in the form of software.

For example, each module, unit, subunit or submodule can be one or more integrated circuits configured to implement the above methods, for example, one or more application specific integrated circuits (ASIC), or, one or more digital signal processors (DSP), or one or more field programmable gate arrays (FPGA), and the like. For another example, when one of the above modules is implemented in the form of a scheduler code of a processing element, the processing element can be a general-purpose processor, for example, a central processing unit (CPU) or other processors that can invoke program codes. For another example, these modules can be integrated together and implemented in the form of a system-on-a-chip (SOC).

The terms "first", "second", and the like in the specification and claims of the present disclosure are used to distinguish similar objects, and are not necessarily used to describe a specific order or sequence. It is to be understood that the data so used can be interchanged under appropriate circumstances such that the embodiments of the present disclosure described herein are implemented in sequences other than those illustrated or described herein, for example. Furthermore, the terms "including" and "having" and any variations thereof, are intended to cover non-exclusive inclusion, for example, a process, method, system, product or device including a series of steps or units are not necessarily limited to those steps or units expressly listed, rather, other steps or units not expressly listed or inherent to the process, method, product or device can be included. In addition, the use of "and/or" in the specification and the claims means at least one of the linked objects, such as A and/or B and/or C, is meant to include A alone, B alone, C alone, and both A and B exist, both B and C exist, A and C both exist, and seven cases where A, B, and C all exist. Similarly, the use of "at least one of A or B" in this specification and in the claims should be understood as "A alone, B alone, or both A and B exist".

It should be noted that in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a ..." does not preclude the existence of other identical elements in the process, method, article, or apparatus that includes the element. In addition, it should be noted that the scope of the method and the apparatus in the embodiments of the present disclosure is not limited to performing functions in an illustrated or discussed sequence, and can further include performing functions in a basically simultaneous manner or in a reverse sequence according to the functions concerned. For example, the described method can be performed in an order different from that described, and the steps can be added, omitted, or combined. In addition, features described with reference to some examples can be combined in other examples.

Based on the descriptions of the foregoing implementations, a person skilled in the art can clearly understand that the method in the foregoing embodiment can be implemented by software in addition to a necessary universal hardware platform or by hardware only. In most circumstances, the former is a preferred implementation. Based on such an understanding, the technical solutions of the present disclosure essentially or the part contributing to the prior art can be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of the present disclosure.

The embodiments of the present disclosure are described above with reference to the accompanying drawings, but the present disclosure is not limited to the foregoing specific implementations, and the foregoing specific implementations are only illustrative and not restrictive. Enlightened by the present disclosure, a person of ordinary skill in the art can make many forms without departing from the purpose of the present disclosure and the protection scope of the claims, all of which fall within the protection of the present disclosure.

## Claims

1. A positioning method for a sidelink, comprising:
transmitting, by a first device, first information to one or more second devices, wherein the first information comprises a positioning request signaling;
transmitting, by the first device, a first positioning reference signal to the second devices, and receiving, by the first device, second positioning reference signals from the second devices; and
obtaining, by the first device, a positioning calculation result of the first device according to a measurement result of the first positioning reference signal and measurement results of the second positioning reference signals, or receiving, by the first device, the positioning calculation result of the first device from one of the second devices.

2. The method according to claim 1, wherein the first information comprises at least one of:
signaling type information of the first information, comprising at least one of positioning reference signal request signaling or a positioning request flag bit;
identification information, comprising at least one of destination identification information, source identification information or a session process ID;
positioning reference signal configuration information, comprising at least one of positioning reference signal configuration parameters, time interval information or a time domain reference point; or
positioning measurement configuration information, comprising at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

3. The method according to claim 1, wherein transmitting, by the first device, the first positioning reference signal to the second devices, and receiving, by the first device, the second positioning reference signals from the second devices comprises:
transmitting, by the first device, the first positioning reference signal to the second devices; and
receiving, by the first device, second information and the second positioning reference signals from the second devices, wherein the second information is feedback information of the first information;
obtaining, by the first device, the positioning calculation result of the first device according to the measurement result of the first positioning reference signal and the measurement results of the second positioning reference signals comprises:
performing, by the first device, positioning measurement according to the second information and/or target positioning reference signals to obtain a first positioning measurement value, wherein the target positioning reference signals comprise the first positioning reference signal and the second positioning reference signals;
receiving, by the first device, second positioning measurement values measured by the second devices from the second devices through the second information; and
obtaining, by the first device, the positioning calculation result of the first device according to the second information and/or target positioning measurement values, wherein the target positioning measurement values comprise the first positioning measurement value and the second positioning measurement values.

4. The method according to claim 1, wherein transmitting, by the first device, the first positioning reference signal to the second devices, and receiving, by the first device, the second positioning reference signals from the second devices comprises:
receiving, by the first device, second information and the second positioning reference signals from the second devices, wherein the second information is feedback information of the first information;
transmitting, by the first device, fourth information and the first positioning reference signal to the second devices, wherein the fourth information is feedback information of the second information; and
receiving, by the first device, fifth information from the second devices, wherein the fifth information is feedback information of the fourth information;
obtaining, by the first device, the positioning calculation result of the first device according to the measurement result of the first positioning reference signal and the measurement results of the second positioning reference signals comprises:
performing, by the first device, positioning measurement according to the second information and/or target positioning reference signals to obtain a first positioning measurement value;
receiving, by the first device, second positioning measurement values measured by the second devices from the second devices through the fifth information, wherein the target positioning reference signals comprise the first positioning reference signal and the second positioning reference signals; and
obtaining, by the first device, the positioning calculation result of the first device according to first target information and/or target positioning measurement values, wherein the first target information is the second information or the fifth information, and the target positioning measurement values comprise the first positioning measurement value and the second positioning measurement values;
receiving, by the first device, the positioning calculation result of the first device from one of the second devices comprises:
performing, by the first device, positioning measurement according to the second information and/or target positioning reference signals to obtain a first positioning measurement value;
transmitting, by the first device, the first positioning measurement value to the second devices through the fourth information; and
receiving, by the first device, the positioning calculation result of the first device from one of the second devices through the fifth information, wherein the positioning calculation result of the first device is obtained by the second devices according to the fourth information and/or target positioning measurement values, wherein the target positioning measurement values comprise the first positioning measurement value and the second positioning measurement values.

5. The method according to claim 3 or 4, wherein information contents of the second information, the fourth information and the fifth information comprise at least one of:
at least part of the third information;
a positioning measurement value;
a time stamp of the positioning measurement value;
quality indication of the positioning measurement value;
positioning measurement value identification information; or
positioning calculation result information,
wherein the third information comprises at least one of:
signaling type information of the third information, comprising at least one of positioning reference signal request signaling or a positioning request flag bit;
identification information, comprising at least one of destination identification information, source identification information or a session process ID;
positioning reference signal configuration information, comprising at least one of positioning reference signal configuration parameters, time interval information or a time domain reference point; or
positioning measurement configuration information, comprising at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

6. The method according to claim 2 or 5, wherein in the case that is the time interval information is carried in target information, or is the time interval information is configured by using one or more higher-layer parameters or preconfigured, the time interval information satisfies at least one of:
when a transmission of a positioning reference signal is activated or scheduled by the target information, the time interval information is a time interval between a time domain starting transmission position of the positioning reference signal and a target time domain reference point, wherein the target time domain reference point is a slot position where the target information is transmitted, or a time domain reference point in the target information, or a time domain reference point configured by using one or more higher-layer parameters, or a preconfigured time domain reference point; or
in the case that the target information supports retransmission, retransmitted target information does not carry the time interval information,
wherein the target information is at least one of the first information, second information, fourth information or fifth information.

7. The method according to claim 5, wherein in the case that the feedback latency bound information is carried in target information, or the feedback latency bound information is configured by using one or more higher-layer parameters or preconfigured, the method further comprises at least one of:
receiving, by the first device, feedback information corresponding to the target information from the second devices within the feedback latency bound information; or
completing, by the first device, an overall positioning process within the feedback latency bound information,
wherein the target information is at least one of the first information, the second information, the fourth information or the fifth information;
the feedback latency bound information satisfies at least one of:
the feedback latency bound information is an upper limit of a feedback time of the target information;
a target time domain reference point of the feedback latency bound information is a time domain reference point configured by using one or more higher-layer parameters or preconfigured, or carried in the target information; or
in the case that the target information supports retransmission, retransmitted target information does not carry the feedback latency bound information.

8. The method according to claim 5, wherein the method further comprises at least one of:
carrying, by the first device, the positioning measurement value identification information in the fourth information, wherein the positioning measurement value identification information is used to indicate the first positioning reference signal and the second positioning reference signals associated with the first positioning measurement value;
presetting time parameters when the first device transmits the first positioning reference signal and time parameters when the second devices transmit the second positioning reference signals, wherein the time parameters comprise at least one of a positioning reference signal transmission period, an offset value in the period or a period reference point;
ensuring that the first device and the second devices measure the first positioning reference signal and the second positioning reference signals in a same measurement window according to an indication of the measurement window indication information; or
carrying, by the first device, device identity information of the first device in the fourth information,
wherein the positioning measurement value identification information comprises at least one of:
related information of measuring the positioning reference signals, comprising at least part of the positioning reference signal configuration information;
a time stamp of the first positioning reference signal and/or time stamps of the second positioning reference signals associated with the positioning measurement value; or
positioning measurement value ID.

9. The method according to claim 1, wherein transmitting, by the first device, the first information to one or more second devices comprises:
transmitting, by the first device, the first information to the second devices through a third device;
the method further comprises:
transmitting, by the first device, the measurement result of the first positioning reference signal and the measurement results of the second positioning reference signals to the third device, and receiving the positioning calculation result of the first device from the third device.

10. A positioning method for a sidelink, comprising:
receiving, by a second device, first information from one or more first devices, wherein the first information comprises a positioning request signaling;
receiving, by the second device, first positioning reference signals from the first devices, and transmitting, by the second device, a second positioning reference signal to the first devices; and
transmitting, by the second device, measurement results of the first positioning reference signals and a measurement result of the second positioning reference signal to the first devices, or obtaining, by the second device, positioning calculation results of the first devices according to the measurement results of the first positioning reference signals and the measurement result of the second positioning reference signal, and transmitting the positioning calculation results of the first devices to the first devices.

11. The method according to claim 10, wherein the first information comprises at least one of:
signaling type information of the first information, comprising at least one of positioning reference signal request signaling or a positioning request flag bit;
identification information, comprising at least one of destination identification information, source identification information or a session process ID;
positioning reference signal configuration information, comprising at least one of positioning reference signal configuration parameters, time interval information or a time domain reference point; or
positioning measurement configuration information, comprising at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

12. The method according to claim 10, wherein receiving, by the second device, the first positioning reference signals from the first devices, and transmitting, by the second device, the second positioning reference signal to the first devices comprises:
receiving, by the second device, the first positioning reference signals from the first devices; and
transmitting, by the second device, second information and the second positioning reference signal to the first devices, wherein the second information is feedback information of the first information;
transmitting, by the second device, the measurement results of the first positioning reference signals and the measurement result of the second positioning reference signal to the first devices comprises:
performing, by the second device, positioning measurement according to the first information and/or target positioning reference signals to obtain a second positioning measurement value, wherein the target positioning reference signals comprise the first positioning reference signals and the second positioning reference signal; and
transmitting, by the second device, the second positioning measurement value to the first devices through the second information.

13. The method according to claim 10, wherein receiving, by the second device, the first positioning reference signals from the first devices, and transmitting, by the second device, the second positioning reference signal to the first devices comprises:
transmitting, by the second device, second information and the second positioning reference signal to the first devices, wherein the second information is feedback information of the first information;
receiving, by the second device, fourth information and the first positioning reference signals from the first devices, wherein the fourth information is feedback information of the second information; and
transmitting, by the second device, fifth information to the first devices, wherein the fifth information is feedback information of the fourth information;
transmitting, by the second device, the measurement results of the first positioning reference signals and the measurement result of the second positioning reference signal to the first devices comprises:
performing, by the second device, positioning measurement according to the fourth information and/or target positioning reference signals to obtain a second positioning measurement value, wherein the target positioning reference signals comprise the first positioning reference signals and the second positioning reference signal; and
transmitting, by the second device, the second positioning measurement value to the first devices through the fifth information;
obtaining, by the second device, the positioning calculation results of the first devices according to the measurement results of the first positioning reference signals and the measurement result of the second positioning reference signal, and transmitting the positioning calculation results of the first devices to the first devices comprises:
performing, by the second device, positioning measurement according to the fourth information and/or target positioning reference signals to obtain a second positioning measurement value, wherein the target positioning reference signals comprise the first positioning reference signals and the second positioning reference signal;
receiving, by the second device, first positioning measurement values measured by the first devices from the first devices through the fourth information;
obtaining, by the second device, the positioning calculation results of the first devices according to the fourth information and/or target positioning measurement values, wherein the target positioning measurement values comprise the first positioning measurement values and the second positioning measurement value; and
transmitting, by the second device, the positioning calculation results of the first devices to the first devices through the fifth information.

14. The method according to claim 12 or 13, wherein information contents of the second information, the fourth information and the fifth information comprise at least one of:
at least part of the third information;
a positioning measurement value;
a time stamp of the positioning measurement value;
quality indication of the positioning measurement value;
positioning measurement value identification information; or
positioning calculation result information,
wherein the third information comprises at least one of:
signaling type information of the third information, comprising at least one of positioning reference signal request signaling or a positioning request flag bit;
identification information, comprising at least one of destination identification information, source identification information or a session process ID;
positioning reference signal configuration information, comprising at least one of positioning reference signal configuration parameters, time interval information or a time domain reference point; or
positioning measurement configuration information, comprising at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

15. The method according to claim 11 or 14, wherein in the case that the time interval information is carried in target information, or the time interval information is configured by using one or more higher-layer parameters or preconfigured, the time interval information satisfies at least one of:
when a transmission of a positioning reference signal is activated or scheduled by the target information, the time interval information is a time interval between a time domain starting transmission position of the positioning reference signal and a target time domain reference point, wherein the target time domain reference point is a slot position where the target information is transmitted, or a time domain reference point in the target information, or a time domain reference point configured by using one or more higher-layer parameters, or a preconfigured time domain reference point; or
in the case that the target information supports retransmission, retransmitted target information does not carry the time interval information,
wherein the target information is at least one of the first information, second information, fourth information or fifth information.

16. The method according to claim 14, wherein in the case that the feedback latency bound information is carried in target information, or the feedback latency bound information is configured by using one or more higher-layer parameters or preconfigured, the method further comprises at least one of:
receiving, by the first devices, feedback information corresponding to the target information from the second device within the feedback latency bound information; or
completing, by the second device, an overall positioning process within the feedback latency bound information,
wherein the target information is at least one of the first information, the second information, the fourth information or the fifth information;
the feedback latency bound information satisfies at least one of:
the feedback latency bound information is an upper limit of a feedback time of the target information;
a target time domain reference point of the feedback latency bound information is a time domain reference point configured by using one or more higher-layer parameters or preconfigured, or carried in the target information; or
in the case that the target information supports retransmission, retransmitted target information does not carry the feedback latency bound information.

17. The method according to claim 14, wherein the method further comprises at least one of:
carrying, by the second device, the positioning measurement value identification information in the second information and/or the fifth information, wherein the positioning measurement value identification information is used to indicate the first positioning reference signals and the second positioning reference signal associated with the second positioning measurement value;
presetting time parameters when the first devices transmits the first positioning reference signals and time parameters when the second device transmit the second positioning reference signal, wherein the time parameters comprise at least one of a positioning reference signal transmission period, an offset value in the period or a period reference point;
ensuring that the first devices and the second device measure the first positioning reference signals and the second positioning reference signal in a same measurement window according to an indication of the measurement window indication information; or
carrying, by the second device, device identity information of the second device in the second information and/or the fifth information,
wherein the positioning measurement value identification information comprises at least one of:
related information of measuring the positioning reference signals, comprising at least part of the positioning reference signal configuration information;
time stamps of the first positioning reference signals and/or a time stamp of the second positioning reference signal associated with the positioning measurement value; or
positioning measurement value ID.

18. The method according to claim 10, wherein receiving, by the second device, the first information from one or more first devices comprises:
receiving, by the second device, the first information from the second devices through a third device;
the method further comprises:
transmitting, by the second device, the measurement results of the first positioning reference signals and the measurement result of the second positioning reference signal to the third device, obtaining, by the third device, the positioning calculation results of the first devices, and transmitting, by the third device, the positioning calculation results of the first devices to the first devices.

19. A positioning method for a sidelink, comprising:
transmitting, by a first device, first information to one or more second devices, wherein the first information comprises a positioning indication signaling;
transmitting, by the first device, a first positioning reference signal to the second devices, and receiving, by the first device, second positioning reference signals from the second devices; and
transmitting, by the first device, a measurement result of the first positioning reference signal and measurement results of the second positioning reference signals to the second devices, or obtaining, by the first device, positioning calculation results of the second devices according to the measurement result of the first positioning reference signal and the measurement results of the second positioning reference signals, and transmitting the positioning calculation results of the second devices to the second devices.

20. The method according to claim 19, wherein the first information comprises at least one of:
signaling type information of the first information, comprising at least one of positioning reference signal indication signaling or a positioning indication flag bit;
identification information, comprising at least one of destination identification information, source identification information or a session process ID;
positioning reference signal configuration information, comprising at least one of positioning reference signal configuration parameters, time interval information or a time domain reference point; or
positioning measurement configuration information, comprising at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

21. The method according to claim 19, wherein transmitting, by the first device, the first positioning reference signal to the second devices, and receiving, by the first device, the second positioning reference signals from the second devices comprises:
receiving, by the first device, second information and the second positioning reference signals from the second devices, wherein the second information is feedback information of the first information; and
transmitting, by the first device, fourth information and the first positioning reference signal to the second devices, wherein the fourth information is feedback information of the second information;
transmitting, by the first device, the measurement result of the first positioning reference signal and the measurement results of the second positioning reference signals to the second devices comprises:
performing, by the first device, positioning measurement according to the second information and/or target positioning reference signals to obtain a first positioning measurement value, wherein the target positioning reference signals comprise the first positioning reference signal and the second positioning reference signals; and
transmitting, by the first device, the first positioning measurement value to the second devices through the fourth information.

22. The method according to claim 19, wherein transmitting, by the first device, the first positioning reference signal to the second devices, and receiving, by the first device, the second positioning reference signals from the second devices comprises:
transmitting, by the first device, the first positioning reference signal to the second devices;
receiving, by the first device, second information and the second positioning reference signals from the second devices, wherein the second information is feedback information of the first information; and
transmitting, by the first device, fourth information to the second devices, wherein the fourth information is feedback information of the second information;
transmitting, by the first device, the measurement result of the first positioning reference signal and the measurement results of the second positioning reference signals to the second devices comprises:
performing, by the first device, positioning measurement according to the second information and/or target positioning reference signals to obtain a first positioning measurement value, wherein the target positioning reference signals comprise the first positioning reference signal and the second positioning reference signals; and
transmitting, by the first device, the first positioning measurement value to the second devices through the fourth information;
obtaining, by the first device, the positioning calculation results of the second devices according to the measurement result of the first positioning reference signal and the measurement results of the second positioning reference signals, and transmitting the positioning calculation results of the second devices to the second devices comprises:
performing, by the first device, positioning measurement according to the second information and/or target positioning reference signals to obtain a first positioning measurement value, wherein the target positioning reference signals comprise the first positioning reference signal and the second positioning reference signals;
receiving, by the first device, second positioning measurement values measured by the second devices from the second devices through the second information;
obtaining, by the first device, the positioning calculation results of the second devices according to the second information and/or target positioning measurement values, wherein the target positioning measurement values comprise the first positioning measurement value and the second positioning measurement values; and
transmitting, by the first device, the positioning calculation results of the second devices to the second devices through the fourth information.

23. The method according to claim 21 or 22, wherein information contents of the second information and the fourth information comprise at least one of:
at least part of the third information;
a positioning measurement value;
a time stamp of the positioning measurement value;
quality indication of the positioning measurement value;
positioning measurement value identification information; or
positioning calculation result information,
wherein the third information comprises at least one of:
signaling type information of the third information, comprising at least one of positioning reference signal indication signaling or a positioning indication flag bit;
identification information, comprising at least one of destination identification information, source identification information or a session process ID;
positioning reference signal configuration information, comprising at least one of positioning reference signal configuration parameters, time interval information or a time domain reference point; or
positioning measurement configuration information, comprising at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

24. The method according to claim 20 or 23, wherein in the case that the time interval information is carried in target information, or the time interval information is configured by using one or more higher-layer parameters or preconfigured, the time interval information satisfies at least one of:
when a transmission of a positioning reference signal is activated or scheduled by the target information, the time interval information is a time interval between a time domain starting transmission position of the positioning reference signal and a target time domain reference point, wherein the target time domain reference point is a slot position where the target information is transmitted, or a time domain reference point in the target information, or a time domain reference point configured by using one or more higher-layer parameters, or a preconfigured time domain reference point; or
in the case that the target information supports retransmission, retransmitted target information does not carry the time interval information,
wherein the target information is at least one of the first information, second information, fourth information or fifth information.

25. The method according to claim 23, wherein in the case that the feedback latency bound information is carried in target information, or the feedback latency bound information is configured by using one or more higher-layer parameters or preconfigured, the method further comprises at least one of:
transmitting, by the second devices, feedback information corresponding to the target information the first device within the feedback latency bound information; or
completing, by the second devices, an overall positioning process within the feedback latency bound information,
wherein the target information is at least one of the first information, the second information, the fourth information or fifth information;
the feedback latency bound information satisfies at least one of:
the feedback latency bound information is an upper limit of a feedback time of the target information;
a target time domain reference point of the feedback latency bound information is a time domain reference point configured by using one or more higher-layer parameters or preconfigured, or carried in the target information; or
in the case that the target information supports retransmission, retransmitted target information does not carry the feedback latency bound information.

26. The method according to claim 23, wherein the method further comprises at least one of:
carrying, by the first device, the positioning measurement value identification information in the fourth information, wherein the positioning measurement value identification information is used to indicate the first positioning reference signal and the second positioning reference signals associated with the first positioning measurement value;
presetting time parameters when the first device transmits the first positioning reference signal and time parameters when the second devices transmit the second positioning reference signals, wherein the time parameters comprise at least one of a positioning reference signal transmission period, an offset value in the period or a period reference point;
ensuring that the first device and the second devices measure the first positioning reference signal and the second positioning reference signals in a same measurement window according to an indication of the measurement window indication information; or
carrying, by the first device, device identity information of the first device in the fourth information,
wherein the positioning measurement value identification information comprises at least one of:
related information of measuring the positioning reference signals, comprising at least part of the positioning reference signal configuration information;
a time stamp of the first positioning reference signal and/or time stamps of the second positioning reference signals associated with the positioning measurement value; or
positioning measurement value ID.

27. The method according to claim 19, wherein transmitting, by the first device, the first information to one or more second devices comprises:
transmitting, by the first device, the first information to the second devices through a third device;
the method further comprises:
transmitting, by the first device, the measurement result of the first positioning reference signal and the measurement results of the second positioning reference signals to the third device, obtaining, by the third device, the positioning calculation results of the second devices, and transmitting, by the third device, the positioning calculation results of the second devices to the second devices.

28. A positioning method for a sidelink, comprising:
receiving, by a second device, first information from one or more first devices, wherein the first information comprises a positioning indication signaling;
receiving, by the second device, first positioning reference signals from the first devices, and transmitting, by the second device, a second positioning reference signal to the first devices; and
obtaining, by the second device, a positioning calculation result of the second device according to measurement results of the first positioning reference signals and a measurement result of the second positioning reference signal, or receiving, by the second device, the positioning calculation result of the second device from one of the first devices.

29. The method according to claim 28, wherein the first information comprises at least one of:
signaling type information of the first information, comprising at least one of positioning reference signal indication signaling or a positioning indication flag bit;
identification information, comprising at least one of destination identification information, source identification information or a session process ID;
positioning reference signal configuration information, comprising at least one of positioning reference signal configuration parameters, time interval information or a time domain reference point; or
positioning measurement configuration information, comprising at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

30. The method according to claim 28, wherein receiving, by the second device, the first positioning reference signals from the first devices, and transmitting, by the second device, the second positioning reference signal to the first devices comprises:
transmitting, by the second device, second information and the second positioning reference signal to the first devices, wherein the second information is feedback information of the first information; and
receiving, by the second device, fourth information and the first positioning reference signals from the first devices, wherein the fourth information is feedback information of the second information;
obtaining, by the second device, the positioning calculation result of the second device according to the measurement results of the first positioning reference signals and the measurement result of the second positioning reference signal comprises:
performing, by the second device, positioning measurement according to the fourth information and/or target positioning reference signals to obtain a second positioning measurement value, wherein the target positioning reference signals comprise the first positioning reference signals and the second positioning reference signal;
receiving, by the second device, first positioning measurement values measured by the first devices from the first devices through the fourth information; and
obtaining, by the second device, positioning calculation results of the first devices according to second target information and/or target positioning measurement values, wherein the second target information is the first information or the fourth information, and the target positioning measurement values comprise the first positioning measurement values and the second positioning measurement value.

31. The method according to claim 28, wherein receiving, by the second device, the first positioning reference signals from the first devices, and transmitting, by the second device, the second positioning reference signal to the first devices comprises:
receiving, by the second device, the first positioning reference signals from the first devices;
transmitting, by the second device, second information and the second positioning reference signal to the first devices, wherein the second information is feedback information of the first information; and
receiving, by the second device, fourth information from the first devices, wherein the fourth information is feedback information of the second information;
obtaining, by the second device, the positioning calculation result of the second device according to the measurement results of the first positioning reference signals and the measurement result of the second positioning reference signal comprises:
performing, by the second device, positioning measurement according to the first information and/or target positioning reference signals to obtain a second positioning measurement value, wherein the target positioning reference signals comprise the first positioning reference signals and the second positioning reference signal;
receiving, by the second device, first positioning measurement values measured by the first devices from the first devices through the fourth information; and
obtaining, by the second device, the positioning calculation result of the second device according to second target information and/or target positioning measurement values, wherein the second target information is the first information or the fourth information, and the target positioning measurement values comprise the first positioning measurement values and the second positioning measurement value;
receiving, by the second device, the positioning calculation result of the second device from one of the first devices comprises:
performing, by the second device, positioning measurement according to the first information and/or target positioning reference signals to obtain a second positioning measurement value, wherein the target positioning reference signals comprise the first positioning reference signals and the second positioning reference signal;
transmitting, by the second device, the second positioning measurement value to the first devices through the second information; and
receiving, by the second device, the positioning calculation result of the second device from one of the first devices through the fourth information, wherein the positioning calculation result of the second device is obtained by the first devices according to the second information and/or target positioning measurement values, wherein the target positioning measurement values comprise the first positioning measurement values and the second positioning measurement value.

32. The method according to claim 30 or 31, wherein information contents of the second information and the fourth information comprise at least one of:
at least part of the third information;
a positioning measurement value;
a time stamp of the positioning measurement value;
quality indication of the positioning measurement value;
positioning measurement value identification information; or
positioning calculation result information,
wherein the third information comprises at least one of:
signaling type information of the third information, comprising at least one of positioning reference signal indication signaling or a positioning indication flag bit;
identification information, comprising at least one of destination identification information, source identification information or a session process ID;
positioning reference signal configuration information, comprising at least one of positioning reference signal configuration parameters, time interval information or a time domain reference point; or
positioning measurement configuration information, comprising at least one of positioning measurement quantity type information, positioning assistance information, positioning reference signal search assistance information, positioning method or capability information, positioning type information, measurement window indication information, positioning calculation function indication information, measurement assistance information, feedback latency bound information, a time domain reference point or positioning priority information.

33. The method according to claim 29 or 32, wherein in the case that the time interval information is carried in target information, or the time interval information is configured by using one or more higher-layer parameters or preconfigured, the time interval information satisfies at least one of:
when a transmission of a positioning reference signal is activated or scheduled by the target information, the time interval information is a time interval between a time domain starting transmission position of the positioning reference signal and a target time domain reference point, wherein the target time domain reference point is a slot position where the target information is transmitted, or a time domain reference point in the target information, or a time domain reference point configured by using one or more higher-layer parameters, or a preconfigured time domain reference point; or
in the case that the target information supports retransmission, retransmitted target information does not carry the time interval information,
wherein the target information is at least one of the first information, second information, fourth information or fifth information.

34. The method according to claim 32, wherein in the case that the feedback latency bound information is carried in target information, or the feedback latency bound information is configured by using one or more higher-layer parameters or preconfigured, the method further comprises at least one of:
transmitting, by the second devices, feedback information corresponding to the target information the first device within the feedback latency bound information; or
completing, by the second devices, an overall positioning process within the feedback latency bound information,
wherein the target information is at least one of the first information, the second information, the fourth information or fifth information;
the feedback latency bound information satisfies at least one of:
the feedback latency bound information is an upper limit of a feedback time of the target information;
a target time domain reference point of the feedback latency bound information is a time domain reference point configured by using one or more higher-layer parameters or preconfigured, or carried in the target information; or
in the case that the target information supports retransmission, retransmitted target information does not carry the feedback latency bound information.

35. The method according to claim 32, wherein the method further comprises at least one of:
carrying, by the second device, the positioning measurement value identification information in the second information and/or the fifth information, wherein the positioning measurement value identification information is used to indicate the first positioning reference signals and the second positioning reference signal associated with the second positioning measurement value;
presetting time parameters when the first devices transmits the first positioning reference signals and time parameters when the second device transmit the second positioning reference signal, wherein the time parameters comprise at least one of a positioning reference signal transmission period, an offset value in the period or a period reference point;
ensuring that the first devices and the second device measure the first positioning reference signals and the second positioning reference signal in a same measurement window according to an indication of the measurement window indication information; or
carrying, by the second device, device identity information of the second device in the second information and/or the fifth information,
wherein the positioning measurement value identification information comprises at least one of:
related information of measuring the positioning reference signals, comprising at least part of the positioning reference signal configuration information;
time stamps of the first positioning reference signals and/or a time stamp of the second positioning reference signal associated with the positioning measurement value; or
positioning measurement value ID.

36. The method according to claim 28, wherein receiving, by the second device, the first information from one or more first devices comprises:
receiving, by the second device, the first information from the second devices through a third device;
the method further comprises:
transmitting, by the second device, the measurement results of the first positioning reference signals and the measurement result of the second positioning reference signal to the third device, and receiving the positioning calculation result of the second device from the third device.

37. A positioning apparatus for a sidelink, comprising:
a first transmitting module configured to transmit, by a first device, first information to one or more second devices, wherein the first information comprises a positioning request signaling;
a first transceiver module configured to transmit, by the first device, a first positioning reference signal to the second devices, and receive, by the first device, second positioning reference signals from the second devices; and
a first positioning module configured to obtain, by the first device, a positioning calculation result of the first device according to a measurement result of the first positioning reference signal and measurement results of the second positioning reference signals, or receive, by the first device, the positioning calculation result of the first device from one of the second devices.

38. A positioning apparatus for a sidelink, comprising:
a first receiving module configured to receive, by a second device, first information from one or more first devices, wherein the first information comprises a positioning request signaling;
a second transceiver module configured to receive, by the second device, first positioning reference signals from the first devices, and transmit, by the second device, a second positioning reference signal to the first devices; and
a second positioning module configured to transmit, by the second device, measurement results of the first positioning reference signals and a measurement result of the second positioning reference signal to the first devices, or obtain, by the second device, positioning calculation results of the first devices according to the measurement results of the first positioning reference signals and the measurement result of the second positioning reference signal, and transmit the positioning calculation results of the first devices to the first devices.

39. A positioning apparatus for a sidelink, comprising:
a second transmitting module configured to transmit, by a first device, first information to one or more second devices, wherein the first information comprises a positioning indication signaling;
a third transceiver module configured to transmit, by the first device, a first positioning reference signal to the second devices, and receive, by the first device, second positioning reference signals from the second devices; and
a third positioning module configured to transmit, by the first device, a measurement result of the first positioning reference signal and measurement results of the second positioning reference signals to the second devices, or obtain, by the first device, positioning calculation results of the second devices according to the measurement result of the first positioning reference signal and the measurement results of the second positioning reference signals, and transmit the positioning calculation results of the second devices to the second devices.

40. A positioning apparatus for a sidelink, comprising:
a second receiving module configured to receive, by a second device, first information from one or more first devices, wherein the first information comprises a positioning indication signaling;
a fourth transceiver module configured to receive, by the second device, first positioning reference signals from the first devices, and transmit, by the second device, a second positioning reference signal to the first devices; and
a fourth positioning module configured to obtain, by the second device, a positioning calculation result of the second device according to measurement results of the first positioning reference signals and a measurement result of the second positioning reference signal, or receive, by the second device, the positioning calculation result of the second device from one of the first devices.

41. A readable storage medium, wherein the readable storage medium stores a program or an instruction, and when the program or the instruction is executed by a processor, steps of the positioning method for the sidelink according to any one of claims 1 to 9, or steps of the positioning method for the sidelink according to any one of claims 10 to 18, or steps of the positioning method for the sidelink according to any one of claims 19 to 27, or steps of the positioning method for the sidelink according to any one of claims 28 to 36 are implemented.
